# EUROPEAN PATENT APPLICATION

(11) **EP 4 319 250 A1**
(43) Date of publication of application: **07.02.2024**
(21) Application number: 22791001.5
(22) Date of filing: 18.04.2022
(51) Int. Cl.: H04W 24/02, H04W 76/27

(54) **COMMUNICATION METHOD AND APPARATUS**

(30) Priority: 22.04.2021 CN 202110435250; 08.05.2021 CN 202110501575
(71) Applicant: Huawei Technologies Co., Ltd., Longgang Shenzhen, Guangdong 518129 (CN)
(72) Inventor: KUANG, Yiru, Shenzhen, Guangdong 518129 (CN); XU, Haibo, Shenzhen, Guangdong 518129 (CN); MOPIDEVI, Rama Kumar, Shenzhen, Guangdong 518129 (CN)
(74) Representative: Gill Jennings & Every LLP
(86) International application number: PCT/CN2022/087468
(87) International publication number: WO 2022/222893

(57) **Abstract**

This application discloses a communication method and apparatus. The method includes: determining whether a first condition is satisfied or determining whether a second condition is satisfied; and when the first condition is not satisfied or the second condition is satisfied, performing any one or more of the following, or when the first condition is satisfied or the second condition is not satisfied, skipping performing any one or more of the following: detecting a physical layer problem of a terminal device, detecting a radio link failure, initializing RRC connection reestablishment, performing cell reselection, sending an RRC reestablishment request message, detecting a beam failure, performing beam failure recovery, and initiating random access for the beam failure recovery, where the first condition indicates that the terminal device expects to leave a radio resource control RRC connected state, and the second condition indicates that the terminal device does not expect to leave the radio resource control RRC connected state. This effectively avoids a case in which behavior of the terminal device is contradictory.

## Description

This application claims priority to Chinese Patent Application No. 202110435250.8, filed with the China National Intellectual Property Administration on April 22, 2021 and entitled "COMMUNICATION METHOD, TERMINAL, AND NETWORK DEVICE", which is incorporated herein by reference in its entirety. This application claims priority to Chinese Patent Application No. 202110501575.1, filed with the China National Intellectual Property Administration on May 8, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Usually, after a terminal device detects a radio link failure, the terminal device may need to initiate a radio resource control (radio resource control, RRC) connection reestablishment process. In addition, the terminal device further needs to perform a cell reselection process, send an RRC reestablishment request message to a network device in a reselected cell, and the like, to ensure that the terminal device can reestablish an RRC connection to the network device.

Therefore, how the terminal device detects the radio link failure needs to be urgently resolved.

### SUMMARY

This application provides a communication method and apparatus, to effectively avoid a case in which behavior of a terminal device is contradictory.

According to a first aspect, an embodiment of this application provides a communication method. The communication method is applied to a terminal device, a chip in the terminal device, or the like. For ease of description, the method provided in this embodiment of this application is described below by using the terminal device as an example. As shown below, the method includes:
determining that a first condition is not satisfied or determining that a second condition is satisfied, where the first condition indicates that the terminal device expects (prefer or expect) to leave a radio resource control RRC connected state, and the second condition indicates that the terminal device does not expect to leave the radio resource control RRC connected state; and performing any one or more of the following: detecting a physical layer problem of the terminal device, detecting a radio link failure, initializing RRC connection reestablishment, performing cell reselection, sending an RRC reestablishment request message, detecting a beam failure, performing beam failure recovery, and initiating random access for the beam failure recovery.

Usually, when the terminal device expects to leave the RRC connected state, the terminal device needs to maintain the RRC connection to a network device for a period of time. However, within this period of time, the terminal device may detect the physical layer problem, the radio link failure, or the like. After the terminal device detects the foregoing events, the terminal device needs to re-detect the RRC connection to the network device.

For example, when the terminal device performs the foregoing steps, if the first condition or the second condition is not added, the terminal device reestablishes the RRC connection to the network device when expecting to leave the RRC connected state. As a result, not only behavior of the terminal device is contradictory, but also a waste of resources is caused. However, in this embodiment of this application, by adding a determining condition, for example, determining that the first condition is not satisfied, or determining that the second condition is satisfied, the terminal device may perform at least one of the following with reference to the first condition or the second condition: detecting the physical layer problem, detecting the radio link failure, initializing the RRC connection reestablishment, performing the cell reselection, sending the RRC reestablishment request message, detecting the beam failure, performing the beam failure recovery, and initiating the random access for the beam failure recovery. Therefore, a case in which the behavior of the terminal device is contradictory is effectively avoided, and a case in which the resources are wasted is effectively avoided. In addition, necessity of performing the foregoing steps by the terminal device is improved.

In a possible implementation, the method further includes: determining that the first condition is satisfied or determining that the second condition is not satisfied; and skipping performing any one or more of the following: detecting the physical layer problem of the terminal device, detecting the radio link failure, initializing the RRC connection reestablishment, performing the cell reselection, sending the RRC reestablishment request message, detecting the beam failure, performing the beam failure recovery, and initiating the random access for the beam failure recovery.

In this embodiment of this application, when the terminal device determines that the first condition is satisfied, for example, the terminal device expects to leave the RRC connected state, the terminal device does not detect the physical layer problem, does not detect the radio link failure, does not initialize the RRC connection reestablishment, or the like. In this way, a problem that the terminal device reestablishes the RRC connection to the network device when the terminal device expects to leave the RRC connection to the network device is effectively resolved, and a case in which the behavior of the terminal device is contradictory is effectively avoided. In addition, when determining that the terminal device expects to leave the RRC connected state, the terminal device does not perform the foregoing events (for example, detecting the physical layer problem, detecting the radio link failure, or detecting the beam failure). Therefore, a problem that the terminal device initiates unnecessary behavior is effectively resolved, a problem that the terminal device wastes power consumption is resolved, and signaling overheads are reduced.

For example, the method according to the first aspect may alternatively be replaced with:
determining whether a first condition is satisfied; and determining, based on whether the first condition is satisfied, whether to perform any one or more of the following: detecting a physical layer problem of the terminal device, detecting a radio link failure, initializing RRC connection reestablishment, performing cell reselection, sending an RRC reestablishment request message, detecting a beam failure, performing beam failure recovery, and initiating random access for the beam failure recovery.

Optionally, the determining, based on whether the first condition is satisfied, whether to perform any one or more of the following includes: performing the any one or more of the following when the first condition is not satisfied; or skipping performing the any one or more of the following when the first condition is satisfied. It may be understood that for the any one or more of the following shown herein, refer to the foregoing descriptions. Details are not described herein again.

For example, the method according to the first aspect may alternatively be replaced with:
determining whether a first condition is satisfied; and when the first condition is satisfied, skipping performing any one or more of the following, or when the first condition is not satisfied, performing any one or more of the following: detecting a physical layer problem of the terminal device, detecting a radio link failure, initializing RRC connection reestablishment, performing cell reselection, sending an RRC reestablishment request message, detecting a beam failure, performing beam failure recovery, and initiating random access for the beam failure recovery.

It may be understood that the foregoing alternative descriptions of the first aspect are merely examples, and descriptions of various variants of the method provided in this embodiment of this application fall within the protection scope of this application.

In a possible implementation, the first condition includes any one or more of the following: The terminal device expects to leave the RRC connected state; the terminal device initializes (initialize) a process of leaving the RRC connected state; the terminal device sends first indication information to the network device, where the first indication information indicates that the terminal device expects to leave the RRC connected state; and a first timer is running, where the first timer is configured to control the terminal device to leave the RRC connected state.

Optionally, the first indication information may further be understood as: indicating that the terminal device intends to leave the RRC connected state, indicating the terminal device to leave the RRC connected state, indicating that the terminal device requests to leave the RRC connected state, indicating the terminal device to disconnect from the RRC connected state, indicating that the terminal device requests to disconnect from the RRC connected state, or the like. A specific description of content indicated by the first indication information is not limited in this embodiment of this application.

Optionally, the first timer may further be understood as first duration for which the terminal device is controlled to wait, where the first duration is duration from a time point at which the terminal device expects to leave the RRC connected state to a time point at which the terminal device leaves the RRC connected state. Optionally, the first duration is duration from a time point at which the terminal device requests to leave the RRC connected state to a time point at which the terminal device receives an RRC release message from the network device. Optionally, the first duration is duration from a time point at which the terminal device intends to leave the RRC connected state to a time point at which the terminal device receives the RRC release message from the network device. Optionally, the first duration is duration from a time point at which the terminal device expects to leave the RRC connected state to a time point at which the terminal device transits to an RRC idle (idle) state. Optionally, the first duration is duration from a time point at which the terminal device expects to leave the RRC connected state to a time point at which the terminal device transits to an RRC inactive (inactive) state (which may also be referred to as an inactivated state). Optionally, the first duration is duration from a time point at which the terminal device sends the first indication information to the network device to a time point at which the terminal device receives the RRC release message from the network device. Optionally, the first duration is duration from a time point at which the terminal device sends the first indication information to the network device to a time point at which the terminal device transits to the RRC idle state or the RRC inactive state. Optionally, the first duration is duration from a time point at which the terminal device initializes leaving of the RRC connected state to a time point at which the terminal device transits to the RRC idle state or the RRC inactive state. It may be understood that different descriptions of a specific function of the first duration are merely examples, and a specific description of the first duration is not limited in this embodiment of this application.

In a possible implementation, the second condition includes any one or more of the following: The terminal device does not expect to leave the RRC connected state; the terminal device does not initialize a process of leaving the RRC connected state; the terminal device does not send first indication information to a network device, where the first indication information indicates that the terminal device expects to leave the RRC connected state; and a first timer is not running, where the first timer is configured to control the terminal device to leave the RRC connected state.

It may be understood that for specific descriptions of the first indication information and the first timer, refer to the foregoing descriptions. Details are not described one by one herein again.

In a possible implementation, the first timer is started or restarted when one or more of the following conditions are satisfied: The terminal device initializes the process of leaving the RRC connected state; the terminal device sends the first indication information to the network device, where the first indication information indicates that the terminal device expects to leave the RRC connected state; and the terminal device successfully sends the first indication information to the network device, where the first indication information indicates that the terminal device expects to leave the RRC connected state.

In a possible implementation, when an RRC release message sent by the network device is received, the first timer is stopped; or when the first timer expires, the first timer is stopped.

It may be understood that for descriptions of starting or restarting and stopping the first timer, refer to following descriptions. Details are not described one by one herein.

In a possible implementation, the initializing the RRC connection reestablishment includes: When at least one item in a third condition is satisfied and at least one item in a fourth condition is not satisfied, initializing the RRC connection reestablishment, where the third condition includes: a radio link failure is detected, reconfiguration synchronization fails, movement from a new radio (new radio, NR) fails, integrity protection verification fails to be received from a lower layer, and RRC connection reconfiguration fails; and the fourth condition includes: access stratum (access stratum, AS) security is not activated, and the AS security is activated but a signaling radio bearer (signaling radio bearer, SRB) 2 and at least one data radio bearer (data radio bearer, DRB) are not established or the SRB 2 is not established in an integrated access and backhaul (integrated access and backhaul, IAB) scenario.

It may be understood that, for a description of initializing the RRC connection establishment, refer to a following description. Details are not described herein.

In a possible implementation, the detecting a radio link failure includes: detecting that a radio link failure occurs on a master node (master node, MN) (which may also be referred to as a master node) or a master cell group (master cell group, MCG) in dual connectivity (dual connectivity, DC); or detecting that a radio link failure occurs on a secondary node (secondary node, SN) (which may be also be referred to as a secondary node) or a secondary cell group (secondary cell group, SCG) in dual connectivity DC.

For example, when detecting that the radio link failure occurs on the MN or the MCG in the DC, the terminal device may initialize the RRC connection reestablishment, perform the cell reselection, send the RRC reestablishment request message, or the like. When the radio link failure occurs on the SN or the SCG in the DC, the terminal device may restore the RRC connection through the MN or the MCG, for example, report SCG failure information through a link of the MN or the MCG.

According to a second aspect, an embodiment of this application provides a communication apparatus, configured to perform the method according to the first aspect or any possible implementation of the first aspect. The communication apparatus includes corresponding units for performing the method according to the first aspect or any possible implementation of the first aspect. For example, the communication apparatus includes a transceiver unit and a processing unit.

The processing unit is configured to determine that a first condition is not satisfied or determine that a second condition is satisfied, where the first condition indicates that a terminal device expects to leave a radio resource control RRC connected state, and the second condition indicates that the terminal device does not expect to leave the radio resource control RRC connected state; and the processing unit is further configured to perform any one or more of the following: detecting a physical layer problem of the terminal device, detecting a radio link failure, initializing RRC connection reestablishment, performing cell reselection, sending an RRC reestablishment request message, detecting a beam failure, performing beam failure recovery, and initiating random access for the beam failure recovery.

Optionally, the processing unit may perform the cell reselection, send the RRC reestablishment request message, or the like by using the transceiver unit. A specific manner of the transceiver unit and the processing unit is not limited in this embodiment of this application.

In a possible implementation, the processing unit is further configured to: determine that the first condition is satisfied or determine that the second condition is not satisfied; and skip performing any one or more of the following: detecting the physical layer problem of the terminal device, detecting the radio link failure, initializing the RRC connection reestablishment, performing the cell reselection, sending the RRC reestablishment request message, detecting the beam failure, performing the beam failure recovery, and initiating the random access for the beam failure recovery.

Optionally, the processing unit may further be understood as that the processing unit may determine whether the first condition or the second condition is satisfied, and determine, based on whether the first condition is satisfied, whether to perform operations such as detecting the physical layer problem, detecting the radio link failure, or initializing the RRC connection reestablishment.

In a possible implementation, the first condition includes any one or more of the following: The terminal device expects to leave the RRC connected state; the terminal device initializes a process of leaving the RRC connected state; the terminal device sends first indication information to a network device, where the first indication information indicates that the terminal device expects to leave the RRC connected state; and a first timer is running, where the first timer is configured to control the terminal device to leave the RRC connected state.

In a possible implementation, the second condition includes any one or more of the following: The terminal device does not expect to leave the RRC connected state; the terminal device does not initialize a process of leaving the RRC connected state; the terminal device does not send first indication information to a network device, where the first indication information indicates that the terminal device expects to leave the RRC connected state; and a first timer is not running, where the first timer is configured to control the terminal device to leave the RRC connected state.

In a possible implementation, the processing unit is further configured to start or restart the first timer when one or more of the following conditions are satisfied: The terminal device initializes the process of leaving the RRC connected state; the terminal device sends the first indication information to the network device, where the first indication information indicates that the terminal device expects to leave the RRC connected state; and the terminal device successfully sends the first indication information to the network device, where the first indication information indicates that the terminal device expects to leave the RRC connected state.

In a possible implementation, when an RRC release message sent by the network device is received, the processing unit is further configured to stop the first timer; or when the first timer expires, the processing unit is further configured to stop the first timer.

In a possible implementation, the processing unit is specifically configured to: when at least one item in a third condition is satisfied and at least one item in a fourth condition is not satisfied, initialize the RRC connection reestablishment, where
the third condition includes: a radio link failure is detected, reconfiguration synchronization fails, movement from a new radio NR fails, integrity protection verification fails to be received from a lower layer, and RRC connection reconfiguration fails; and the fourth condition includes: Access stratum AS security is not activated, and the AS security is activated but a signaling radio bearer SRB 2 and at least one data radio bearer DRB are not established or the SRB 2 is not established in an integrated access and backhaul IAB scenario.

In a possible implementation, the processing unit is specifically configured to detect that a radio link failure occurs on a master node MN or a master cell group MCG in dual connectivity DC; or detect that a radio link failure occurs on a secondary node SN or a secondary cell group SCG in dual connectivity DC.

For example, the communication apparatus may include a terminal device, a chip in the terminal device, or the like.

According to a third aspect, an embodiment of this application provides a communication apparatus. The communication apparatus includes a processor, configured to perform the method according to the first aspect or any possible implementation of the first aspect. Alternatively, the processor is configured to execute a program stored in a memory. When the program is executed, the method according to the first aspect or any possible implementation of the first aspect is performed.

When the method is performed, a process of receiving information in the method may be understood as a process of receiving the input information by the processor. When the processor receives the input information, a transceiver receives the information, and inputs the information to the processor. Further, after the transceiver receives the information, other processing may need to be performed on the information before the information is input to the processor.

Unless otherwise specified, or if operations such as transmitting, sending, and receiving related to the processor do not contradict an actual function or internal logic of the operations in related descriptions, all the operations may be more usually understood as operations such as outputting, receiving, and inputting of the processor, instead of operations such as transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in this embodiment of this application.

In a possible implementation, the memory is located outside the communication apparatus.

In a possible implementation, the memory is located inside the communication apparatus.

In this embodiment of this application, the processor and the memory may alternatively be integrated into one component. For example, the processor and the memory may alternatively be integrated together.

In a possible implementation, the communication apparatus further includes a transceiver. The transceiver is configured to receive or send a signal.

In this embodiment of this application, the communication apparatus may include a terminal device, a chip in the terminal device, or the like.

According to a fourth aspect, an embodiment of this application provides a communication apparatus. The communication apparatus includes a logic circuit and an interface, where the logic circuit is coupled to the interface. The logic circuit is configured to determine that a first condition is not satisfied or determine that a second condition is satisfied; and is further configured to perform any one or more of the following: detecting a physical layer problem of a terminal device, detecting a radio link failure, initializing RRC connection reestablishment, performing cell reselection, sending an RRC reestablishment request message, detecting a beam failure, performing beam failure recovery, and initiating random access for the beam failure recovery.

It may be understood that the logic circuit may send the RRC reestablishment request message or the like through the interface. A specific function of the interface is not limited in this embodiment of this application.

It may be understood that for descriptions of the first condition or the second condition, first indication information, a first timer, and the like, refer to the description of the first aspect, or refer to various embodiments shown below. Details are not described herein again.

According to a fifth aspect, an embodiment of this application provides a computer-readable storage medium. The computer-readable storage medium is configured to store a computer program, and when the computer program is run on a computer, the method according to the first aspect or any possible implementation of the first aspect is performed.

According to a sixth aspect, an embodiment of this application provides a computer program product. The computer program product includes a computer program, and when the computer program is run on a computer, the method according to the first aspect or any possible implementation of the first aspect is performed.

For example, the computer program product may also be referred to as a computer program. Therefore, when the computer program is run on a computer, the method according to the first aspect or any possible implementation of the first aspect is performed.

### BRIEF DESCRIPTION OF DRAWINGS

FIG. 1 is a schematic diagram of a communication system according to an embodiment of this application;
FIG. 2a and FIG. 2b each are a schematic flowchart of a method for leaving an RRC connected state by UE according to an embodiment of this application;
FIG. 3a to FIG. 3c each are a schematic flowchart of a communication method according to an embodiment of this application;
FIG. 4 is a schematic diagram of a dual connectivity scenario according to an embodiment of this application;
FIG. 5a is a schematic diagram of a user plane protocol stack of a terminal device according to an embodiment of this application;
FIG. 5b is a schematic diagram of a control plane protocol stack of a terminal device according to an embodiment of this application;
FIG. 6 is a schematic flowchart of a method for indicating measurement relaxation according to an embodiment of this application; and
FIG. 7 to FIG. 9 each are a schematic diagram of a structure of a communication apparatus according to an embodiment of this application.

### DESCRIPTION OF EMBODIMENTS

To make objectives, technical solutions, and advantages of this application clearer, the following further describes this application with reference to accompanying drawings.

In the specification, claims, and the accompanying drawings of this application, terms such as "first" and "second" are only intended to distinguish between different objects but do not describe a particular order. In addition, terms "include", "have", and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It can be explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. A character "/" usually indicates an "or" relationship between the associated objects. "At least one of the following items (pieces)" or a similar expression thereof refers to any combination of these items. For example, at least one item (piece) of a, b, or c may indicate a, b, c, "a and b", "a and c", "b and c", or "a, b, and c".

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system (for example, 6G) emerging in future communication development.

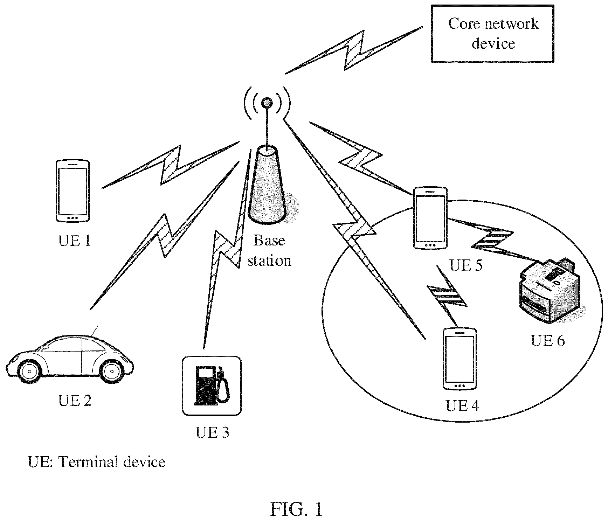

The technical solutions provided in this application may further be applied to machine type communication (machine type communication, MTC), machine-to-machine communication long term evolution technology (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, the internet of vehicles. Communication manners in the internet of vehicles system are collectively referred to as vehicle to X (vehicle to everything, V2X, where X may indicate anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication. For example, in FIG. 1 shown below, a terminal device may communicate with a terminal device by using a D2D technology, an M2M technology, a V2X technology, or the like.

FIG. 1 is a schematic diagram of a communication system according to an embodiment of this application. Method embodiments shown below in this application may be applicable to the communication system shown in FIG. 1. Details are not described below.

For example, the communication system may include at least one access network device and at least one terminal device.

For example, the access network device may be a next generation NodeB (next generation NodeB, gNB), a next generation evolved NodeB (next generation evolved NodeB, ng-eNB) (which may be referred to as an eNB for short), an access network device in future 6G communication, or the like. The access network device may be any device with a wireless transceiver function, including but not limited to the base stations shown above. Alternatively, the base station may be a base station in a future communication system, for example, a 6th generation communication system. Optionally, the access network device may be an access node, a wireless relay node, a wireless backhaul node, or the like in a wireless local area network (wireless fidelity, Wi-Fi) system. Optionally, the access network device may be a radio controller in a cloud radio access network (cloud radio access network, CRAN) scenario. Optionally, the access network device may be a wearable device, a vehicle-mounted device, or the like. Optionally, the access network device may alternatively be a small cell, a transmission reception point (transmission reception point, TRP) (which may alternatively be referred to as a transmission point), or the like. It may be understood that the access network device may alternatively be a base station or the like in a future evolved public land mobile network (public land mobile network, PLMN).

For example, the terminal device may also be referred to as user equipment (user equipment, UE), a terminal, or the like. The terminal device is a device with a wireless transceiver function. The terminal device may be deployed on land, and includes an indoor device, an outdoor device, a handheld device, a wearable device, or a vehicle-mounted device. The terminal device may alternatively be deployed on water, for example, on a ship. The terminal device may alternatively be deployed in air, for example, deployed on an airplane, a balloon, or a satellite. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home, or the like. It may be understood that the terminal device may alternatively be a terminal device in a future 6G network, a terminal device in a future evolved PLMN, or the like.

It may be understood that the terminal device shown in this application may not only include a vehicle (for example, an entire vehicle) in the internet of vehicles, but also may include a vehicle-mounted device or a vehicle-mounted terminal in the internet of vehicles (including a host in a T-box or an internet of vehicles system) or the like. A specific form of the terminal device applied to the internet of vehicles is not limited in this application. For ease of description, the method in this application is described below by using an example in which the terminal device is the UE.

The communication system shown in FIG. 1 includes one base station and six UEs, such as UE 1 to UE 6 in FIG. 1, and a core network device. It may be understood that for specific descriptions of the UE and the base station, refer to the foregoing descriptions. Details are not described herein again. It should be understood that FIG. 1 shows an example of one base station, six UEs, and communication links between the communication devices. Optionally, the communication system may include a plurality of base stations, and a coverage area of each base station may include another quantity of UEs, for example, more or fewer UEs. This is not limited in this application. Optionally, the communication system shown in FIG. 1 may further include the core network device, for example, an access and mobility management function (access and mobility management function, AMF). This is not limited in this application.

Terms related to this application are described below.

### 1. Multi-SIM terminal

The multi-SIM terminal is a terminal on which two or more telephone cards (SIM or USIM) are simultaneously installed. For example, the telephone card includes a subscriber identification module (subscriber identification module, SIM) and/or a universal subscriber identification module (universal subscriber identification module, USIM). The multi-SIM terminal may separately register with different networks, for example, different access network devices and/or different core network devices, by using two or more telephone cards. Therefore, one telephone card corresponds to one UE, and a plurality of cards in the multi-SIM terminal may be understood as a plurality of UEs.

It may be understood that the methods shown in this application may be applicable not only to a terminal with one telephone card but also a terminal with two or more telephone cards.

### 2. Radio link failure (radio link failure, RLF)

If radio link quality deteriorates, the radio link failure occurs. For example, by detecting one or more of the following events, the UE may consider that the radio link failure is detected.
A. A physical layer problem (physical layer problem) occurs. For example, a timer T310 expires.

For example, if the UE continuously receives N310 "out-of-synchronization (out-of-sync)" indications for a special cell (special cell, SpCell) from a lower layer (lower layer) and timers T300, T301, T304, T311, T316, and T319 are not running, the timer T310 corresponding to the special cell is started. The special cell includes a primary cell (primary cell, PCell) and a primary secondary cell (primary secondary cell, PSCell).

For example, when any dual active protocol stack (dual active protocol stack, DAPS) bearer (bearer) is configured, if the UE continuously receives N310 "out-of-synchronization (out-of-sync)" indications for a source (source) special cell (special cell, SpCell) from a lower layer and the timer T304 is not running, the timer T310 corresponding to the source special cell is started.

When the timer T310 expires, the physical layer problem (physical layer problem) occurs. In this case, it may be considered that the radio link failure is detected.

It may be understood that for specific descriptions of N310, T300, T301, T304, T311, T316, and T319, refer to a related standard or protocol. Details are not described in this application.

B. The UE does not perform a handover in time after reporting measurement. For example, a timer T312 expires.

For example, measurement reporting shown herein may be understood as reporting a measurement report by the UE, and the handover herein may be understood as handing over from one cell to another cell by the UE. For example, when the radio link quality deteriorates, the UE may fail to perform the handover in time. Therefore, when the UE reports the measurement report but does not perform the handover in time, it may indicate that the radio link failure occurs.

C. A random access problem (random access problem) occurs and the timers T300, T301, T304, T311, T316, and T319 are not running.

D. An indication indicating that a maximum number of retransmissions at a radio link control (radio link control, RLC) layer is reached is received.

E. A consistent uplink listen before talk (listen before talk, LBT) failure indication is received from a medium access control (medium access control, MAC) layer and timer T304 is not running.

It may be understood that, when one or more of the foregoing events are detected, optionally, the UE may further determine whether the following condition is satisfied:
F. An indication comes from the RLC layer (for example, the indication indicating that the maximum number of retransmissions at the RLC layer is reached), carrier aggregation (carrier aggregation, CA) duplication (duplication) is configured and activated, and an allowed serving cell parameter (for example, allowedServingCells) of a corresponding logical channel includes only a secondary cell. If the condition F is not satisfied, it is considered that the radio link failure is detected. For example, that the condition is not satisfied may include one or more of the following: The indication is not from the RLC layer, the CA duplication is not configured, the CA duplication is not activated, and the allowed serving cell parameter of a corresponding logical channel includes not only the secondary cell.

Optionally, when any one or more of the conditions A to E are satisfied, the UE may consider that the radio link failure is detected. Optionally, when any one or more of the conditions A to E are satisfied, and F is not satisfied, the UE may consider that the radio link failure is detected. It may be understood that the foregoing method for detecting the radio link failure by the UE is merely an example. For a specific description, refer to a related standard or protocol. Details are not described one by one in this application.

It should be noted that, in a dual connectivity (dual connectivity, DC) scenario, if the foregoing event occurs on a master node, a master node (master node, MN), or a master cell group (master cell group, MCG), it may be considered that the radio link failure occurs on the MN or the MCG. If the foregoing event occurs on a secondary node, a secondary node (secondary node, SN), or a secondary cell group (secondary cell group, SCG), it may be considered that the radio link failure occurs on the SN or the SCG. For example, if no DC is configured, the special cell includes the primary cell (primary cell, PCell), where the PCell is a cell of the MN or the MCG. If the DC is configured, the special cell includes the primary cell (primary cell, PCell) and the primary secondary cell (primary secondary cell, PSCell), where the PCell is a cell of the MN or the MCG, and the PSCell is a cell of the SN or the SCG.

### 3. Radio resource control (radio resource control, RRC) connection reestablishment initialization

After the UE considers that the radio link failure is detected, the UE may need to initiate a connection reestablishment process. Optionally, after the UE considers that the radio link failure is detected, the UE may further determine whether the following condition is satisfied:
G. Access stratum (access stratum, AS) security is not activated.
H. The access stratum security is activated, but a signaling radio bearer (signaling radio bearer, SRB) 2 and at least one data radio bearer (data radio bearer, DRB) are not established or the SRB 2 is not established in an integrated access and backhaul (integrated access and backhaul, IAB) scenario.

If either of the condition G or the condition H is not satisfied, or the conditions G and H are not satisfied, the UE initializes the RRC connection reestablishment (which may also be referred to as that the UE needs to initiate the connection reestablishment process). If the UE satisfies G and/or H, the UE does not initialize the RRC connection reestablishment (which may also be referred to as that the UE does not initiate the connection reestablishment).

After determining that the RRC connection reestablishment needs to be initialized, the UE further needs to perform a series of behavior and procedures such as a cell reselection process and sending an RRC reestablishment request (RRC reestablishment request) message to a network device in a reselected cell, to reestablish an RRC connection to the network device.

### 4. Period of time T

For the multi-SIM terminal, it is possible that the multi-SIM terminal can communicate with only one telephone card at a time. For example, the multi-SIM terminal currently communicates with a network device A on a card 1, and at this time, a service also arrives on a card 2 (a network pages the card 2, for example, a network device B sends a paging message to the card 2), the multi-SIM terminal may choose to disconnect the communication between the card 1 and the network device A, and establish communication between the card 2 and the network device B. It may be understood that the multi-SIM terminal shown herein is merely an example, and even if the multi-SIM terminal is not a multi-SIM terminal, the method provided in this application is also applicable.

For example, if the UE expects to disconnect from a network device (such as the network device A), for example, the UE transits from an RRC connected (RRC connected) state to an RRC idle (RRC idle) state or an RRC inactive (RRC inactive) state (which may also be referred to as an RRC inactivated state), the UE may send first indication information to the network device. For example, the first indication information may be referred to as release indication information, indication information indicating that the UE expects to leave the RRC connected state, or the like. A specific name of the first indication information is not limited in this application. For ease of description, the method provided in this application is described below by using an example in which the first indication information is the release indication information.

Optionally, the release indication information indicates that the UE expects or intends to leave the RRC connected state. Optionally, the release indication information may indicate that the UE expects to transit from the RRC connected state to the RRC idle state or the RRC inactive state. Optionally, the release indication information may indicate an RRC state to which the UE expects to transit, and the RRC state includes the RRC idle state or the RRC inactive state.

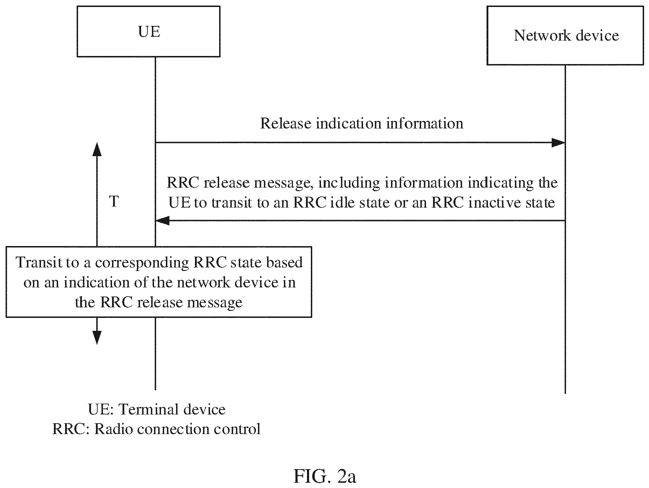

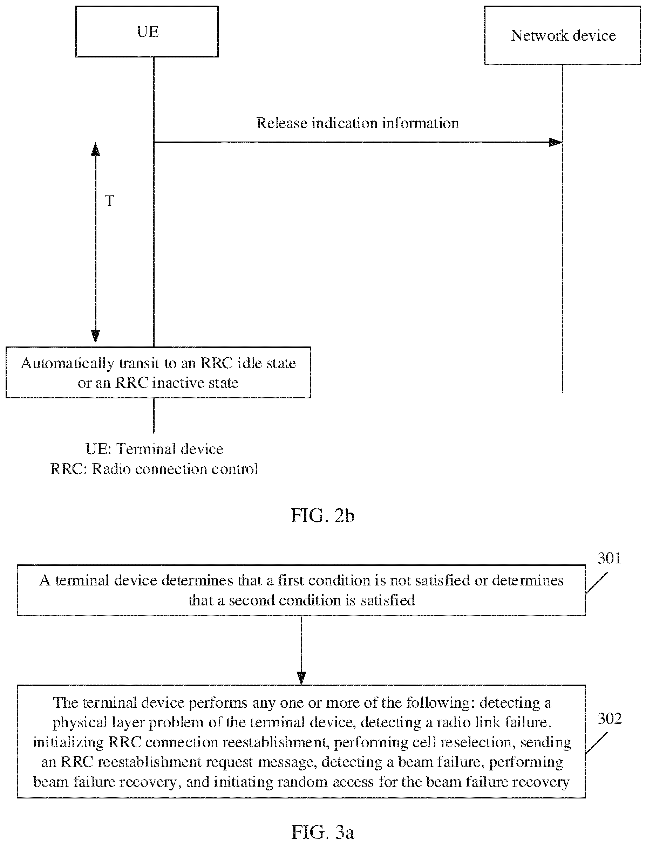

After the UE sends the release indication information, or after the UE expects to disconnect from the RRC connected state (which is only an example herein), the UE needs to maintain the RRC connected state with the network device and wait for a period of time T. In this case, the following case exists:
Case 1: FIG. 2a is a schematic flowchart of a method for leaving an RRC connected state by UE according to an embodiment of this application. If UE receives, within a period of time T, an RRC release (RRC release) message sent by a network device, where the RRC release message may include information indicating the UE to transit to an RRC idle state or an RRC inactive state, or the RRC release message includes information indicating an RRC idle state or an RRC inactive state, the UE transits to a corresponding RRC state based on an indication of the network device in the RRC release message.
Case 2: FIG. 2b is a schematic flowchart of another method for leaving an RRC connected state by UE according to an embodiment of this application. If UE does not receive, within a period of time T, an RRC release (RRC release) message sent by a network device, the UE may automatically transit to an RRC idle state or an RRC inactive state. Optionally, the UE automatically transits to the RRC idle state. In other words, when the UE automatically transits the RRC state, the UE may automatically transit to the RRC idle state instead of the RRC inactive state. Optionally, the UE automatically transits to a predetermined RRC state. The predetermined RRC state may be a state predefined in a protocol or a standard, or may be preconfigured by the network device in advance. A method for configuring the predetermined RRC state is not limited in this application. Optionally, if the network device preconfigures a parameter used in the RRC inactive state, the UE automatically transits to the RRC inactive state. In other words, if the network device sends configuration information of the RRC inactive state to the UE, the UE may automatically transit to the RRC inactive state; or if the network device does not send configuration information of the RRC inactive state to the UE, the UE automatically transits to the RRC idle state.

It may be understood that the period of time T shown in this application may also be referred to as duration T or the like. A specific name of the period of time T is not limited in this application. For example, the period of time T may be controlled by a timer. For example, the timer may be referred to as a timer configured to control the UE to leave the RRC connected state, a timer configured to control the UE to disconnect from the RRC connected state, a timer configured to count when the UE transits from the RRC connected state to the RRC idle state or the RRC inactive state, a counter configured to control waiting duration T of the UE, or the like. In other words, after the UE expects or intends to leave the RRC connected state, the timer needs to be started. In a running process of the timer, the UE maintains the RRC connection to the network device and monitors the RRC release message. For example, when the timer expires, if the UE still does not receive the RRC release message, the UE automatically transits to the RRC idle state or the RRC inactive state. For example, in the running process of the timer, if the UE receives the RRC release message, the UE may transit to the RRC idle state or the RRC inactive state based on the indication of the RRC release message.

It may be understood that the description of the period of time T herein is merely an example. For another description of the period of time T, refer to the method shown below in this application. Details are not described one by one herein.

Within the period of time T, the UE may detect a radio link failure. For example, based on determining some or all of the conditions A to H, the UE may need to initiate a connection reestablishment process, and therefore needs to perform a series of behavior and procedures such as a cell reselection process and sending an RRC reestablishment request message to a network device in a reselected cell, to reestablish an RRC connection to the network device. However, the reason why the UE needs wait for the period of time T is precisely because the UE expects or intends to disconnect the connection from the network device, and the connection reestablishment process is to restore the connection to the network device. As a result, in a case in which the UE expects or intends to disconnect the RRC connection from the network device, an RRC connection to the network device is reestablished, which not only causes the behavior of the UE to be contradictory, but also causes the UE to waste power consumption and signaling.

In view of this, this application provides a communication method and apparatus, to effectively resolve a problem that the UE reestablishes an RRC connection to the network device when the UE expects or intends to disconnect the RRC connection from the network device, thereby effectively improving a case in which the UE wastes the power consumption or the signaling, and the UE initiates unnecessary behavior (such as initiating the connection reestablishment). Therefore, a power consumption loss of the UE is effectively reduced, and signaling overheads are reduced.

In this application, for example, after the UE expects (expect or prefer), intends to, or indicates to leave the RRC connected state, after the UE initialize (initialize) (or triggers (trigger)) a process of leaving the RRC connected state, after the UE sends the release indication information to the network device, or when a first timer is running (running), the UE is not allowed to detect the radio link failure, the UE is not allowed to initiate the connection reestablishment process, the UE is not allowed to perform the cell reselection process in the connection reestablishment process, the UE is not allowed to perform the process of sending the RRC reestablishment request message to the network device in the connection reestablishment process, the UE is not allowed to detect a beam failure, the UE is not allowed to perform beam failure recovery, or the UE is not allowed to initiate random access for the beam failure recovery.

In this application, for example, when the UE does not expect, intend to, or indicates to leave the RRC connected state, the UE does not initialize (or does not trigger) the process of leaving the RRC connected state, when the UE does not send the release indication information to the network device, or when the first timer is not running, the UE may detect the radio link failure, the UE may initiate the connection reestablishment process, the UE may perform the cell reselection process in the connection reestablishment process, the UE may perform the process of sending the RRC reestablishment request message to the network device in the connection reestablishment process, the UE may detect the beam failure, the UE may perform the beam failure recovery, or the UE may initiate the random access for the beam failure recovery.

It may be understood that, in the foregoing case, the UE needs to determine whether the radio link failure is detected, whether the connection reestablishment process needs to be initiated, whether the cell reselection process in the connection reestablishment process needs to be performed, or the like based on a related condition (for example, some or all of the conditions A to H).

The communication method provided in embodiments of this application is described in detail below.

FIG. 3a is a schematic flowchart of a communication method according to an embodiment of this application. As shown in FIG. 3a, the method includes:
301: A terminal device determines that a first condition is not satisfied or determines that a second condition is satisfied.

For example, the first condition indicates that the terminal device expects to leave an RRC connected state. The first condition includes any one or more of the following: The terminal device expects to leave the RRC connected state; the terminal device intends to leave the RRC connected state; the terminal device indicates to leave the RRC connected state; the terminal device requests to leave the RRC connected state; the terminal device requests to disconnect an RRC connection from a network device (for example, the access network device described above), the terminal device intends to disconnect the RRC connection from the network device, the terminal device initializes (initialize) a process of leaving the RRC connected state; the terminal device sends first indication information to the network device, where the first indication information indicates that the terminal device expects to leave the RRC connected state; the terminal device requests to transit from the RRC connected state to an RRC idle state; the terminal device requests to transit from the RRC connected state to an RRC inactive state; and a first timer is running, where the first timer is configured to control the terminal device to leave the RRC connected state. It may be understood that the foregoing description of the first condition is merely an example. However, any method that can indicate that the terminal device expects to leave the RRC connected state falls within the scope of the first condition shown in this embodiment of this application.

For example, the second condition indicates that the terminal device does not expect to leave the RRC connected state. The second condition includes any one or more of the following: The terminal device does not expect to leave the RRC connected state; the terminal device does not intend to leave the RRC connected state; the terminal device does not indicate to leave the RRC connected state; the terminal device does not request to leave the RRC connected state; the terminal device does not request to disconnect an RRC connection from a network device, the terminal device does not intend to disconnect the RRC connection from the network device, the terminal device does not initialize a process of leaving the RRC connected state; the terminal device does not send first indication information to the network device, where the first indication information indicates that the terminal device expects to leave the RRC connected state; the terminal device does not request to transit from the RRC connected state to the RRC idle state; the terminal device does not request to transit from the RRC connected state to the RRC inactive state; and a first timer is not running, where the first timer is configured to control the terminal device to leave the RRC connected state. It may be understood that the foregoing description of the second condition is merely an example. However, any method that can indicate that the terminal device does not expect to leave the RRC connected state falls within the scope of the second condition shown in this embodiment of this application.

Optionally, the first indication information may further be understood as: indicating that the terminal device intends to leave the RRC connected state, indicating the terminal device to leave the RRC connected state, indicating that the terminal device requests to leave the RRC connected state, indicating the terminal device to disconnect from the RRC connected state, indicating that the terminal device requests to disconnect from the RRC connected state, or the like. A specific description of content indicated by the first indication information is not limited in this embodiment of this application. For example, the first indication information may further be referred to as release indication information, indication information indicating that the terminal device expects to leave the RRC connected state, or the like. A specific name of the first indication information is not limited in this embodiment of this application. For ease of understanding, the communication method provided in this embodiment of this application is described below by using the release indication information as an example.

Optionally, the first timer may further be understood as first duration for which the terminal device is controlled to wait, where the first duration is duration from a time point at which the terminal device expects to leave the RRC connected state to a time point at which the terminal device leaves the RRC connected state. Optionally, the first duration may be understood as a period of time for which the terminal device needs to maintain the RRC connected state with the network device and wait after the terminal device expects to leave the RRC connected state. Optionally, the first duration may be understood as duration from a time point at which the terminal device requests to leave the RRC connected state to a time point at which the terminal device receives an RRC release message from the network device. Optionally, the first duration may be understood as duration from a time point at which the terminal device intends to leave the RRC connected state to a time point at which the terminal device receives the RRC release message from the network device. Optionally, the first duration may be understood as duration from a time point at which the terminal device expects to leave the RRC connected state to a time point at which the terminal device transits to the RRC idle (idle) state. Optionally, the first duration may be understood as duration from a time point at which the terminal device expects to leave the RRC connected state to a time point at which the terminal device transits to the RRC inactive (inactive) state (which may also be referred to as an inactivated state). Optionally, the first duration may be understood as duration from a time point at which the terminal device sends the first indication information to the network device to a time point at which the terminal device receives the RRC release message from the network device. Optionally, the first duration may be understood as duration from a time point at which the terminal device sends the first indication information to the network device to a time point at which the terminal device transits to the RRC idle state or the RRC inactive state. Optionally, the first duration may be understood as duration from a time point at which the terminal device initializes leaving of the RRC connected state to a time point at which the terminal device transits to the RRC idle state or the RRC inactive state. Optionally, the first duration may further be understood as duration from a time point at which the terminal device successfully sends the first indication information to the network device to a time point at which the terminal device receives the RRC release message from the network device. Optionally, the first duration may further be understood as duration from a time point at which the terminal device successfully sends the first indication information to the network device to a time point at which the terminal device transits to the RRC idle state or the RRC inactive state. That the terminal device successfully sends the first indication information to the network device may be understood as that the terminal device receives an acknowledgment for confirmation from the network device. A method for learning, by the terminal device, that the network device successfully receives the first indication information is not limited in this embodiment of this application.

It may be understood that different descriptions of a specific function of the first duration are merely examples, and a specific description of the first duration is not limited in this embodiment of this application.

In this embodiment of this application, starting or restarting of the first timer and stopping of the first timer may be shown as follows:
For example, the first timer is started or restarted when one or more of the following conditions are satisfied:
The terminal device initializes the process of leaving the RRC connected state; the terminal device sends the first indication information to the network device, where the first indication information indicates that the terminal device expects to leave the RRC connected state; the terminal device successfully sends the first indication information to the network device, where the first indication information indicates that the terminal device expects to leave the RRC connected state; and the terminal device requests to leave the RRC connected state.

For example, when the RRC release message sent by the network device is received, the first timer is stopped; or when the first timer expires, the first timer is stopped.

It may be understood that for specific descriptions of starting or restarting of the first timer and stopping of the first timer, refer to following descriptions. Details are not described herein.

302: The terminal device performs any one or more of the following: detecting a physical layer problem of the terminal device, detecting a radio link failure, initializing RRC connection reestablishment, performing cell reselection, sending an RRC reestablishment request message, detecting a beam failure, performing beam failure recovery, and initiating random access for the beam failure recovery.

For example, if the terminal device determines that the first condition is not satisfied, the terminal device may detect the physical layer problem. Optionally, it may further be understood as follows: The terminal device determines that the first condition is not satisfied, and the terminal device considers that the physical layer problem is detected on the premise that the terminal device does not satisfy the first condition and satisfies a condition for the physical layer problem to occur. It may be understood that a sequence of determining that the first condition is satisfied and determining that the condition for the physical layer problem to occur is satisfied is not limited in this embodiment of this application. Optionally, the terminal device may first determine whether the first condition is satisfied, and then determine whether the condition for the physical layer problem to occur is satisfied. Optionally, the terminal device may first determine whether the condition for the physical layer problem to occur is satisfied, and then determine whether the first condition is satisfied. It may be understood that the foregoing descriptions of the physical layer problem and the first condition are also applicable to descriptions of the physical layer problem and the second condition, and details are not described herein. For ease of description, the method provided in this embodiment of this application is described below by using the first condition as an example.

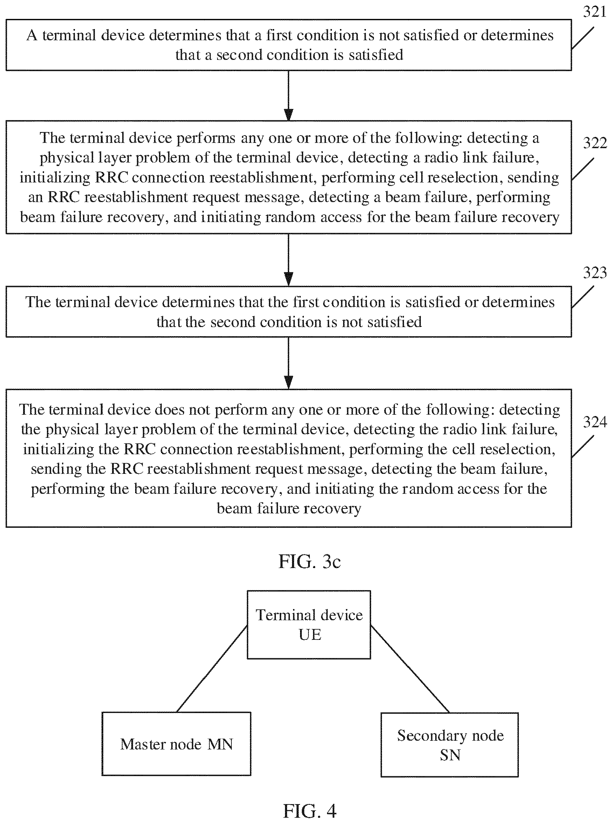

For example, if the terminal device determines that the first condition is not satisfied, the terminal device may detect the radio link failure. Similarly, a sequence of determining whether the first condition is satisfied and determining whether a condition for the radio link failure is satisfied is not limited in this embodiment of this application. Optionally, the radio link failure shown in this embodiment of this application may occur in an MN or an MCG in DC, or may occur in an SN or an SCG in the DC. FIG. 4 is a schematic diagram of a dual connectivity scenario according to an embodiment of this application. As shown in FIG. 4, UE may be connected to two base stations, for example, an MN and an SN. For example, when detecting that the radio link failure occurs on the MN or the MCG in the DC, the terminal device may initialize RRC connection reestablishment, perform cell reselection, send an RRC reestablishment request message, or the like. When the radio link failure occurs on the SN or the SCG in the DC, the terminal device may restore the RRC connection through the MN or the MCG, for example, report SCG failure information through a link of the MN or the MCG. It may be understood that the dual connectivity shown in FIG. 4 is merely an example, and this is not limited in this embodiment of this application.

For example, if the terminal device determines that the first condition is not satisfied, the terminal device may initialize the RRC connection reestablishment. Optionally, when a third condition is satisfied and a fourth condition is not satisfied, the terminal device determines whether the first condition is satisfied. When the first condition is not satisfied, the terminal device initializes the RRC connection reestablishment. Optionally, the terminal device may determine whether the first condition is satisfied, when the first condition is satisfied, determine whether the third condition is satisfied and whether the fourth condition is satisfied, and when the third condition is satisfied and the fourth condition is not satisfied, initialize the RRC connection reestablishment. Optionally, the terminal device may first determine whether the third condition is satisfied, when the third condition is satisfied, determine whether the first condition and the fourth condition are satisfied, and when neither the first condition nor the fourth condition is satisfied, initialize the RRC connection reestablishment. It may be understood that a sequence of determining each of the conditions shown above is merely an example, and this is not limited in this embodiment of this application. For example, the third condition includes at least one of the following: a radio link failure is detected, reconfiguration synchronization fails, movement from an NR fails, integrity protection verification fails to be received from a lower layer, and RRC connection reconfiguration fails. The fourth condition includes: AS security is not activated, and the AS security is activated but an SRB 2 and at least one DRB are not established or the SRB 2 is not established in an IAB scenario. It may be understood that for specific descriptions of the third condition or the fourth condition, refer to following descriptions. Details are not described one by one herein.

For example, if the terminal device determines that the first condition is not satisfied, the terminal device may perform the cell reselection. It may be understood that, after the terminal device initializes the RRC connection reestablishment, the terminal device may determine whether the first condition is satisfied, and if the first condition is not satisfied, the terminal device may perform the cell reselection. Therefore, for descriptions of the first condition and the cell reselection, refer to the foregoing descriptions of the first condition and initializing the RRC connection reestablishment, or refer to embodiments shown below. Details are not described one by one herein.

For example, if the terminal device determines that the first condition is not satisfied, the terminal device may send the RRC reestablishment request message. Optionally, the terminal device may determine whether the third condition and the fourth condition are satisfied, when the third condition is satisfied and the fourth condition is not satisfied, determine that the first condition is not satisfied, and determine, based on whether a condition for sending the RRC connection reestablishment request message is satisfied, whether to send the RRC connection reestablishment request message. Optionally, when the third condition is satisfied and the fourth condition is not satisfied, if a reselected cell is a cell to which the radio link failure occurs, and the first condition is not satisfied, the RRC reestablishment request message is sent to the network device. Optionally, when the third condition is satisfied and the fourth condition is not satisfied, the terminal device determines whether the first condition is satisfied, and if the first condition is not satisfied, determines whether a reselected cell is a cell to which the radio link failure occurs. If the reselected cell is the cell to which the radio link failure occurs, the terminal device sends the RRC reestablishment request message to the network device. Optionally, when the third condition is satisfied and the fourth condition is not satisfied, the terminal device determines whether a reselected cell is a cell to which the radio link failure occurs. If the reselected cell is the cell to which the radio link failure occurs, the terminal device determines whether the first condition is satisfied, and when the first condition is not satisfied, sends the RRC reestablishment request message to the network device. It may be understood that a sequence of each of the foregoing steps is not limited in this embodiment of this application.

For example, if the terminal device determines that the first condition is not satisfied, the terminal device may detect the beam failure. Usually, the terminal device monitors control channel quality. If the control channel quality is continuously lower than a threshold for a specific period of time, the terminal device considers that the beam failure (beam failure) is detected. Therefore, in this embodiment of this application, when the terminal device determines that the first condition is not satisfied, and when the control channel quality is lower than the threshold for the specific period of time, the terminal device considers that the beam failure is detected.

For example, if the terminal device determines that the first condition is not satisfied, the terminal device may perform the beam failure recovery. Optionally, when detecting the beam failure, the terminal device may determine whether the first condition is satisfied, and when the first condition is not satisfied, perform the beam failure recovery.

For example, if the terminal device determines that the first condition is not satisfied, the terminal device may initiate the random access for the beam failure recovery. Optionally, when the terminal device needs to perform the beam failure recovery, the terminal device determines whether the first condition is satisfied, and when the first condition is not satisfied, initiates the random access for the beam failure recovery.

It may be understood that, in this embodiment of this application, another determining condition for the UE to detect the beam failure, perform the beam failure recovery, or initiate the random access for the beam failure recovery is not limited. It may be understood that the foregoing description is merely an example. For a specific description, refer to embodiments shown below.

In this embodiment of this application, by adding a determining condition, for example, determining that the first condition is not satisfied, or determining that the second condition is satisfied, the terminal device may perform at least one of the following with reference to the first condition or the second condition: detecting the physical layer problem, detecting the radio link failure, initializing the RRC connection reestablishment, performing the cell reselection, sending the RRC reestablishment request message, detecting the beam failure, performing the beam failure recovery, and initiating the random access for the beam failure recovery. This effectively resolves a problem that the terminal device reestablishes an RRC connection to the network device when the terminal device expects to leave the RRC connection to the network device. Therefore, a case in which behavior of the terminal device is contradictory is effectively avoided, and a case in which resources are wasted is effectively avoided.

Embodiments of this application further provide another communication method. The method includes: The terminal device determines that the first condition is satisfied or determines that the second condition is not satisfied; and skips performing any one or more of the following: detecting the physical layer problem of the terminal device, detecting the radio link failure, initializing the RRC connection reestablishment, performing the cell reselection, sending the RRC reestablishment request message, detecting the beam failure, performing the beam failure recovery, and initiating the random access for the beam failure recovery.

The method provided in embodiments of this application is described below still by using the first condition as an example.

For example, if the terminal device determines that the first condition is satisfied, the terminal device may not detect the physical layer problem. Optionally, if the terminal device determines that the first condition is satisfied, the terminal device no longer determines whether the condition for the physical layer problem to occur is satisfied. Optionally, when the condition for the physical layer problem to occur is satisfied, the terminal device determines whether the first condition is satisfied. If the first condition is satisfied, the terminal device no longer detects whether the physical layer problem occurs. Therefore, the terminal device no longer performs one or more of the following: detecting the radio link failure, initializing the RRC connection reestablishment, performing the cell reselection, and sending the RRC reestablishment request message.

For example, if the terminal device determines that the first condition is satisfied, the terminal device does not detect the radio link failure.

For example, if the terminal device determines that the first condition is satisfied, the terminal device does not initialize the RRC connection reestablishment. Optionally, when the third condition is satisfied and the fourth condition is not satisfied, the terminal device determines whether the first condition is satisfied. When the first condition is satisfied, the RRC connection reestablishment is not initialized. Optionally, the terminal device may determine whether the first condition is satisfied, and when the first condition is satisfied, the terminal device no longer needs to determine whether the third condition is satisfied and whether the fourth condition is satisfied. Therefore, the terminal device does not initialize the RRC connection reestablishment. Optionally, the terminal device may first determine whether the third condition is satisfied, when the third condition is satisfied, determine whether the first condition and the fourth condition are satisfied, and when the first condition is satisfied and the fourth condition is not satisfied, or when the first condition is satisfied and the fourth condition is satisfied, the terminal device does not initialize the RRC connection reestablishment. Therefore, the terminal device no longer performs one or more of the following: performing the cell reselection, and sending the RRC reestablishment request message. It may be understood that a sequence of determining each of the conditions shown above is merely an example, and this is not limited in this embodiment of this application. It may be understood that for a specific description of the third condition or the fourth condition, refer to the foregoing description, or refer to a following description. Details are not described one by one herein.

For example, if the terminal device determines that the first condition is satisfied, the terminal device does not perform the cell reselection. Optionally, when the third condition is satisfied and the fourth condition is not satisfied, the terminal device may initialize the RRC connection reestablishment. Then, the terminal device determines whether the first condition is satisfied, and if the first condition is satisfied, the terminal device does not perform the cell reselection. Further, the terminal device no longer needs to send the RRC reestablishment request message to the network device.

For example, if the terminal device determines that the first condition is satisfied, the terminal device does not send the RRC reestablishment request message. Optionally, after performing the cell reselection, the terminal device determines whether the first condition is satisfied. If the first condition is satisfied, and the reselected cell is the cell to which the radio link failure occurs (or the reselected cell is not the cell to which the radio link failure occurs), the terminal device does not send the RRC reestablishment request message to the network device. Optionally, after performing the cell reselection, when the reselected cell is the cell to which the radio link failure occurs, the terminal device determines whether the first condition is satisfied. If the first condition is satisfied, the terminal device does not send the RRC reestablishment request message to the network device.

For example, if the terminal device determines that the first condition is satisfied, the terminal device does not detect the beam failure. Optionally, when determining that the first condition is satisfied, the terminal device no longer monitors beam quality. Optionally, when the monitored control channel quality is lower than the threshold for the specific period of time, the terminal device determines whether the first condition is satisfied. If the first condition is satisfied, the terminal device no longer detects whether the beam fails. Therefore, the terminal device no longer performs the beam failure recovery, and initiates the random access for the beam failure recovery. It may be understood that a specific value of the threshold is not limited in this embodiment of this application.

For example, if the terminal device determines that the first condition is satisfied, the terminal device does not perform the beam failure recovery. Optionally, when detecting the beam failure, the terminal device may determine whether the first condition is satisfied, and when the first condition is satisfied, the terminal device no longer performs a process of the beam failure recovery.

For example, if the terminal device determines that the first condition is satisfied, the terminal device does not initiate the random access for the beam failure recovery.

It may be understood that the foregoing descriptions are merely examples. For specific descriptions, refer to embodiments shown below.

In this embodiment of this application, when the terminal device determines that the first condition is satisfied, for example, the terminal device expects to leave the RRC connected state, the terminal device does not detect the physical layer problem, does not detect the radio link failure, does not initialize the RRC connection reestablishment, or the like. In this way, a problem that the terminal device reestablishes an RRC connection to the network device when the terminal device expects to leave the RRC connection to the network device is effectively resolved, and a case in which behavior of the terminal device is contradictory is effectively avoided. In addition, when determining that the terminal device expects to leave the RRC connected state, the terminal device does not perform the foregoing events (for example, detecting the physical layer problem, detecting the radio link failure, or detecting the beam failure). Therefore, a problem that the terminal device initiates unnecessary behavior is effectively resolved, a problem that the terminal device wastes power consumption is resolved, and signaling overheads are reduced.

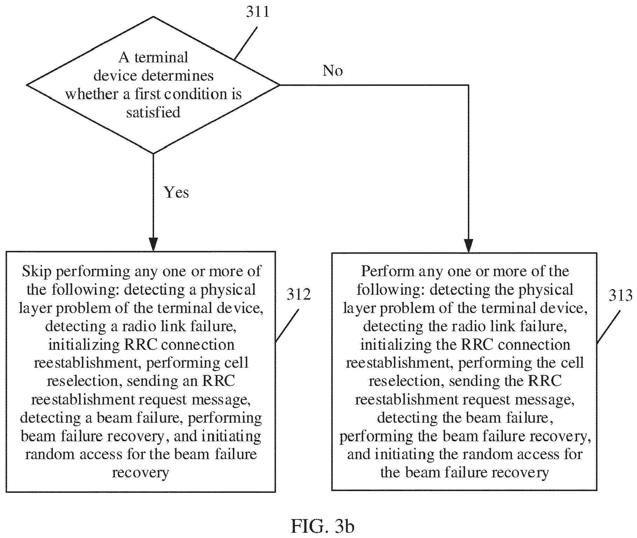

FIG. 3b is a schematic flowchart of another communication method according to an embodiment of this application. As shown in FIG. 3b, the method includes:
311: A terminal device determines whether a first condition is satisfied.
312: When it is determined that the first condition is satisfied, skip performing any one or more of the following: detecting a physical layer problem of the terminal device, detecting a radio link failure, initializing RRC connection reestablishment, performing cell reselection, sending an RRC reestablishment request message, detecting a beam failure, performing beam failure recovery, and initiating random access for the beam failure recovery.
313: When it is determined that the first condition is not satisfied, perform any one or more of the following: detecting the physical layer problem of the terminal device, detecting the radio link failure, initializing the RRC connection reestablishment, performing the cell reselection, sending the RRC reestablishment request message, detecting the beam failure, performing the beam failure recovery, and initiating the random access for the beam failure recovery.

It may be understood that for specific descriptions of step 311 to step 313, refer to the method shown above, or refer to a specific embodiment shown below. Details are not described herein again.

FIG. 3c is a schematic flowchart of another communication method according to an embodiment of this application. As shown in FIG. 3c, the method includes:
321: A terminal device determines that a first condition is not satisfied or determines that a second condition is satisfied.
322: The terminal device performs any one or more of the following: detecting a physical layer problem of the terminal device, detecting a radio link failure, initializing RRC connection reestablishment, performing cell reselection, sending an RRC reestablishment request message, detecting a beam failure, performing beam failure recovery, and initiating random access for the beam failure recovery.
323: The terminal device determines that the first condition is satisfied or determines that the second condition is not satisfied.
324: The terminal device does not perform any one or more of the following: detecting the physical layer problem of the terminal device, detecting the radio link failure, initializing the RRC connection reestablishment, performing the cell reselection, sending the RRC reestablishment request message, detecting the beam failure, performing the beam failure recovery, and initiating the random access for the beam failure recovery.

For example, a time interval between step 321 and step 323 is not limited in this embodiment of this application. For example, the terminal device may determine, at a specific time interval, whether the first condition is satisfied, and if the first condition is not satisfied, step 322 may be performed or the like. For example, the terminal device may also determine, in real time, whether the first condition is satisfied or the like. This is not limited in this embodiment of this application.

It may be understood that for specific descriptions of step 321 to step 324, refer to the method shown above, or refer to a specific embodiment shown below. Details are not described herein again.

The method provided in this application is described in detail below from different embodiments.

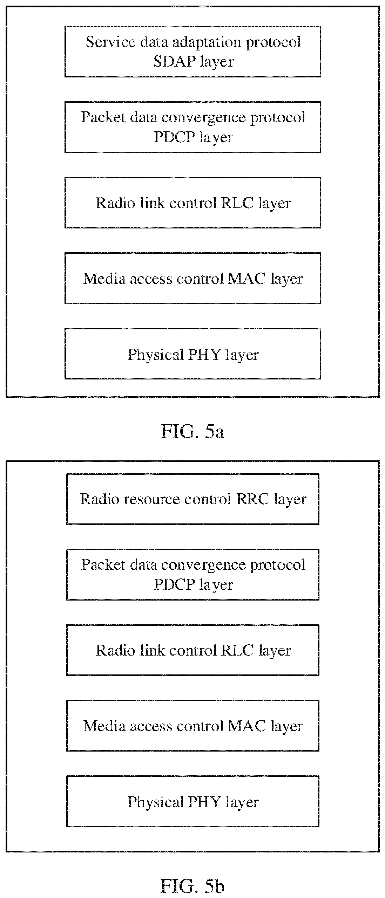

For example, FIG. 5a is a schematic diagram of a user plane protocol stack of a terminal device according to an embodiment of this application. As shown in FIG. 5a, the user plane protocol stack includes a service data adaptation protocol (service data adaptation protocol, SDAP) layer, a packet data convergence protocol (packet data convergence protocol, PDCP) layer, a radio link control (radio link control, RLC) layer, a medium access control (medium access control, MAC) layer, and a physical (physical, PHY) layer.

For example, FIG. 5b is a schematic diagram of a control plane protocol stack of a terminal device according to an embodiment of this application. As shown in FIG. 5b, the control plane protocol stack includes an RRC layer, a PDCP layer, an RLC layer, an MAC layer, and a PHY layer. It may be understood that a lower layer shown in this application may be a relative concept. For example, for the MAC layer, the lower layer may be the PHY layer.

### Embodiment 1

When UE detects a physical layer problem based on the condition A, there may be the following implementations:

### Implementation 1

If the UE continuously receives N310 "out-of-synchronization (out-of-sync)" indications for a special cell (special cell, SpCell) from a lower layer (lower layer) and timers T300, T301, T304, T311, T316, and T319 and a first timer are not running, a timer T310 corresponding to the special cell is started.

### Implementation 2

If the UE continuously receives the N310 "out-of-synchronization (out-of-sync)" indications for the special cell (special cell, SpCell) from the lower layer (lower layer), the timers T300, T301, T304, T311, T316, and T319 are not running, and the UE does not expect or intend to leave the RRC connected state, does not initialize a process of leaving the RRC connected state, or the UE does not send release indication information to a network device, the timer T310 corresponding to the special cell is started.

It may be understood that the foregoing description of the first condition is applicable to the description of detecting the physical layer problem in embodiments of this application. Details are not described herein. For example, if the UE continuously receives the N310 "out-of-synchronization" indications for the special cell from the lower layer, the timers T300, T301, T304, T311, T316, and T319 are not running, and the UE does not request to leave the RRC connected state (or the UE does not request transition from the RRC connected state to an RRC idle state or an RRC inactive state), the timer T310 corresponding to the special cell is started.

### Implementation 3

If the UE continuously receives N310 "out-of-synchronization (out-of-sync)" indications for a source (source) special cell (special cell, SpCell) from the lower layer (lower layer), and the timer T304 and the first timer are not running, a timer T310 corresponding to the source special cell is started.

For example, in a cell handover process of the UE, a source cell and a target cell exist.

### Implementation 4

If the UE continuously receives the N310 "out-of-synchronization (out-of-sync)" indications for the source (source) special cell (special cell, SpCell) from the lower layer (lower layer), the timer T304 is not running, and the UE does not expect or intend to leave the RRC connected state, does not initialize the process of leaving the RRC connected state, or the UE does not send the release indication information to the network device, the timer T310 corresponding to the special cell is started.

It may be understood that, for the foregoing implementations, if the UE expects or intends to leave the RRC connected state, the UE initializes the process of leaving the RRC connected state, the UE sends the release indication information to the network device, or the first timer is in a running process, the UE does not start the timer T310 corresponding to the special cell (including the source special cell). Therefore, the UE does not detect the physical layer problem, does not detect a radio link failure, does not initialize RRC connection reestablishment, and the like. Optionally, the UE may first determine that the UE expects to leave the RRC connected state, and then the UE does not start the timer T310 of the corresponding cell. Optionally, the UE may first monitor the N310 "out-of-synchronization" indications for the special cell received from the lower layer, and the timer T304 is not running. Then, whether the UE expects to leave the RRC connected state is determined. If the UE expects to leave the RRC connected state, the timer T310 of the corresponding cell is not started. If the UE does not expect to leave the RRC connected state, the timer T310 of the corresponding cell is started. It may be understood that a sequence of the determining condition is not limited in this embodiment of this application.

### Implementation 5

For example, if the timer T310 expires and the first timer is not running, it is considered that the radio link failure is detected.

For example, if the timer T310 expires, and the UE does not expect or intend to leave the RRC connected state, does not initialize the process of leaving the RRC connected state, or the UE does not send the release indication information to the network device, it is considered that the radio link failure is detected.

It may be understood that, for Implementations 1 to 4, when the timer T310 expires, it may be considered that the radio link failure is detected. For implementations 1 to 5, the UE may further determine whether the following conditions are satisfied: An indication comes from an RLC layer (for example, an indication indicating that a maximum number of retransmissions at the RLC layer is reached) (for example, the indication is passed from the RLC layer to an RRC layer), CA duplication (duplication) is configured and activated, and an allowed serving cell parameter of a corresponding logical channel includes only a secondary cell (refer to the condition F shown above). If the conditions are not satisfied (refer to the condition F), it is considered that the radio link failure is detected. For example, after detecting the radio link failure, the UE may further initialize the RRC connection reestablishment. For example, the UE may initialize an RRC connection reestablishment process when either of the condition G or the condition H is not satisfied, or the conditions G and H are not met. For specific descriptions of the condition G or the condition H, refer to the foregoing descriptions. Details are not described one by one herein again. It may be understood that the descriptions of the conditions F, G, and H are also applicable to embodiments shown below. Therefore, details are not described one by one again below.

### Implementation 6

It may be understood that, for Implementations 1 to 5, the determining condition for detecting the physical layer problem is modified to resolve a problem that the UE expects to leave the RRC connected state but reestablishes the RRC connection to the network device.

In this embodiment of this application, a determining condition (for example, the condition A) of the radio link failure may not be modified, but behavior of the UE may be specified. For example, when the UE expects or intends to leave the RRC connected state, the UE initializes the process of leaving the RRC connected state, the UE sends the release indication information to the network device, or the first timer is in the running process, the UE does not monitor the "out-of-synchronization (out-of-sync)" indication sent from the lower layer. In other words, the UE may not count the "out-of-synchronization (out-of-sync)" indication, so that the UE does not continuously receive the N310 "out-of-synchronization (out-of-sync)" indications for the special cell from the lower layer. Therefore, the UE does not start the timer T310 corresponding to the special cell. Correspondingly, when the UE does not expect or intend to leave the RRC connected state, does not initialize the process of leaving the RRC connected state, the UE does not send the release indication information to the network device, or the first timer is not running, the UE may monitor the "out-of-synchronization (out-of-sync)" indication sent from the lower layer. In this case, when the timer T310 expires, the UE may further detect the radio link failure based on the condition F, and further determine, based on the condition G or the condition H, whether to initialize the RRC connection reestablishment. For specific descriptions of the conditions F, G, and H, refer to the foregoing descriptions. Details are not described one by one herein again.

Embodiment 1 describes the method provided in embodiments of this application based on the condition A. Embodiment 2 below describes the method provided in embodiments of this application by using an example in which "the determining condition for detecting the radio link failure" is modified.

### Embodiment 2

UE considers, by detecting Conditions 1 and 2, that a radio link failure is detected.

Condition 1: The UE does not expect or intend to leave an RRC connected state, does not initialize a process of leaving the RRC connected state, the UE does not send release indication information to a network device, or a first timer is not running. Condition 2: A physical layer problem (physical layer problem) indication occurs (for example, a timer T310 expires), the UE does not perform a handover in time after measurement is reported (for example, a timer T312 expires), a random access problem (random access problem) indication occurs and timers T300, T301, T304, T311 and T319 are not running, an indication indicating that a maximum number of retransmissions at an RLC layer is reached is received, or a consistent uplink LBT failure indication is received from an MAC layer, and the timer T304 is not running.

Optionally, Condition 2 may further include: An indication comes from the RLC layer (for example, the indication indicating that the maximum number of retransmissions at the RLC layer is reached), carrier aggregation (carrier aggregation, CA) duplication (duplication) is configured and activated, and an allowed serving cell parameter (for example, allowedServingCells) of a corresponding logical channel includes only a secondary cell. If the condition F is not satisfied, it is considered that the radio link failure is detected.

In other words, the UE may determine, based on any one or more of the conditions A to F and Condition 1, whether the radio link failure is detected. Optionally, after Condition 1 is satisfied, the UE determines Condition 2, so that when both Condition 1 and Condition 2 are satisfied, considers that the radio link failure is detected. Optionally, after Condition 2 is satisfied, the UE determines Condition 1, so that when both Condition 1 and Condition 2 are satisfied, considers that the radio link failure is detected. Optionally, the UE may not distinguish between a sequence of determining Condition 1 and a sequence of determining Condition 2.

For example, after detecting the radio link failure, the UE may further determine, based on the condition G or the condition H, whether to initialize RRC connection reestablishment. For specific descriptions of the conditions F, G, and H, refer to the foregoing descriptions. Details are not described one by one herein again.

Optionally, when the UE expects or intends to leave the RRC connected state, the UE initializes the process of leaving the RRC connected state, the UE sends the release indication information to the network device, or the first timer is in a running process, and Condition 2 is satisfied, the UE may leave the RRC connected state. Optionally, the UE performs a process of returning to an RRC idle state. Optionally, the UE performs a process of returning to an RRC inactive state. Optionally, the UE sets an RRC release cause to "RRC connection failure". In other words, the UE no longer needs to continue to perform the step of detecting the radio link failure, for example, no longer needs to continue to determine the condition G and/or the condition H, and the UE no longer needs to initialize the RRC connection reestablishment.

After the UE detects the radio link failure, the UE may need to initiate a connection reestablishment process. Therefore, Embodiment 3 below describes the method provided in embodiments of this application by using an example in which the "initializing the RRC connection establishment process" is modified.

### Embodiment 3

UE initializes RRC connection reestablishment based on Condition 1, Condition 2, and Condition 3.

Condition 1: The UE does not expect or intend to leave an RRC connected state, the UE does not initialize a process of leaving the RRC connected state, the UE does not send release indication information to a network device, or a first timer is not running. Condition 2: The UE detects a radio link failure. Condition 3: AS security is not activated, and the AS security is activated but an SRB 2 and at least one DRB are not established or the SRB 2 is not established in an IAB scenario (refer to G and H shown above).

Optionally, in addition to the condition that the UE detects the radio link failure, Condition 2 may further include: Reconfiguration synchronization fails, movement from an NR fails, integrity protection verification fails to be received from a lower layer, or RRC connection reconfiguration fails. If any item in Condition 2 is satisfied, it is considered that Condition 2 is satisfied. Optionally, when the UE satisfies Conditions 1 and 2 but does not satisfy Condition 3, the UE initializes an RRC connection reestablishment process. Optionally, when the UE does not satisfy Condition 1, the UE satisfies Condition 2, and does not satisfy Condition 3, the UE does not initialize the RRC connection reestablishment. In other words, when the UE expects or intends to leave the RRC connected state, the UE initializes the process of leaving the RRC connected state, the UE sends the release indication information to the network device, or the first timer is in a running process, even if the UE satisfies Condition 2 and does not satisfy Condition 3, the UE does not initialize the RRC connection reestablishment process. A sequence of each of the conditions is not limited in this embodiment of this application.

It may be understood that for specific descriptions of Condition 1 to Condition 3, refer to the foregoing descriptions. Details are not described herein again.

When the UE needs to initialize the RRC connection reestablishment process, the UE may further perform a cell reselection process. Therefore, Embodiment 4 below describes the method provided in embodiments of this application by using an example in which the "cell reselection process" is modified.

### Embodiment 4

For example, after an RRC connection reestablishment process is initialized, UE may perform one or more of the following behavior: if T310 is running, stopping the timer T310, if T304 is running, stopping the timer T304, starting a timer T311, suspending all radio bearers except an SRB 3, resetting MAC, when a secondary cell of an MCG is configured, releasing the secondary cell of the MCG, and when a special cell is configured, releasing configuration of the special cell. It may be understood that a sequence of the behavior and a sequence of the cell reselection are not limited in this embodiment of this application.

In this embodiment of this application, whether the UE performs a cell reselection process needs to be based on Condition 1.

For example, if the UE does not expect or intend to leave an RRC connected state, the UE does not initialize a process of leaving the RRC connected state, the UE does not send release indication information to a network device, or a first timer is not running, the UE may continue to perform the cell reselection process. Optionally, the UE may further send an RRC reestablishment request message to the network device in a reselected cell.

For example, when the UE expects or intends to leave the RRC connected state, the UE initializes the process of leaving the RRC connected state, the UE sends the release indication information to the network device, or the first timer is in a running process, the UE does not continue to perform the cell reselection process, and the UE does not send the RRC reestablishment request message to the network device in the reselected cell. For example, after the UE initializes the RRC connection reestablishment, the UE may determine whether the UE expects to leave the RRC connected state. If the UE does not expect to leave the RRC connected state, the UE performs the cell reselection process. If the UE expects to leave the RRC connected state, the UE does not perform the cell reselection process. For example, the UE does not perform the cell reselection process. However, the UE may perform a process of returning to an RRC idle state, the UE performs a process of returning to an RRC inactive state, or the UE sets a release cause to "RRC connection failure". Optionally, the UE may perform other behavior after initializing the RRC connection reestablishment process. For example, the other behavior herein may be stopping the timer T310 if T310 is running, stopping the timer T304 if T304 is running, or the like. For a specific description of the other behavior, refer to the foregoing description. Details are not described herein again.

After the UE detects the radio link failure, initializes the RRC connection reestablishment process, and performs the cell reselection process, the UE further needs to send the RRC reestablishment request message to the network device in the cell obtain through the reselection. Therefore, Embodiment 5 below describes the method provided in embodiments of this application by using an example in which the "sending the RRC reestablishment request message" is modified.

### Embodiment 5

For example, after UE expects or intends to leave an RRC connected state, the UE initializes a process of leaving the RRC connected state, the UE sends release indication information to a network device, or when a first timer is in a running process, the UE does not send an RRC reestablishment request message to the network device. Optionally, the UE may determine, based on whether a reselected cell is an originally connected cell (for example, a cell to which a radio link failure occurs), whether to send the RRC reestablishment request message to the network device. If the reselected cell is the originally connected cell, the UE sends the RRC reestablishment request message to the network device. If the reselected cell is not the originally connected cell, the UE does not send the RRC reestablishment request message to the network device. Optionally, when the UE does not send the RRC reestablishment request message, the UE may perform a process of returning to an RRC idle state, the UE performs a process of returning to an RRC inactive state, or the UE sets a release cause to "RRC connection failure".

For example, if the UE does not expect or intend to leave the RRC connected state, does not initialize the process of leaving the RRC connected state, and does not send the release indication information to the network device, or the first timer is not running, the UE sends the RRC connection reestablishment request (RRCReestablishmentRequest) message to the network device in the reselected cell.

According to embodiments of this application, such as Embodiment 1 to Embodiment 5, unnecessary behavior initiated by the UE can be effectively avoided. For example, when the UE expects to leave the RRC connected state, detecting the radio link failure, initiating the connection reestablishment process, performing the cell reselection process, sending the RRC reestablishment request message, or the like can be avoided to be done by the UE, thereby effectively reducing signaling overheads and avoiding a waste of resources.

It may be understood that the foregoing embodiments may be separate embodiments, or may be combined with each other. This is not limited in embodiments of this application.

It should be noted that Embodiment 1 to Embodiment 5 may also be applicable to a DC scenario. For example, the radio link failure may be a radio link failure occurring on an MN or an MCG in the DC. For another example, the radio link failure may be a radio link failure occurring on an SN or an SCG in the DC.

Optionally, after the UE expects or intends to leave the RRC connected state, it may be considered that when the UE initializes the process of leaving the RRC connected state, it may be considered that when the UE sends the release indication information to the network device, or it may be considered that when the first timer is in the running process, the UE is not allowed to initialize a failure information process to report an RLC failure.

Optionally, when the UE does not expect or intend to leave the RRC connected state, it may be considered that when the UE does not initialize the process of leaving the RRC connected state, it may be considered that when the UE does not send the release indication information to the network device, or it may be considered that when the first timer is not in the running process, the UE may further initialize the failure information process to report the RLC failure. In this case, the UE needs to further determine a related condition to determine whether to initialize the failure information process to report the RLC failure.

The foregoing embodiments shown in this application may be applied to the DC scenario, so that the unnecessary behavior initiated by the UE can be avoided, for example, detecting the radio link failure, initiating the connection reestablishment process, sending the RRC reestablishment request message, or initializing the failure information process to report the RLC failure, thereby effectively reducing the signaling overheads.

### Embodiment 6

It may be understood that the method provided in this application may be applied not only to a radio link failure, but also to a beam failure. For example, UE monitors control channel quality. If the control channel quality is continuously lower than a threshold for a specific period of time, the UE considers that the beam failure (beam failure) is detected, and enters a beam failure recovery process. Therefore, the UE indicates, to a network device by using a random access process of the beam failure recovery, that a beam failure occurs, and notifies the network device of a backup beam number. If the UE successfully receives response of the network device on the backup beam, it is considered that the beam failure recovery process is successfully completed; or if the UE does not receive response of the network device on the backup beam, the UE needs to enter a link recovery process.

Optionally, when the UE expects or intends to leave an RRC connected state, when the UE initializes a process of leaving the RRC connected state, when the UE sends release indication information to the network device, when a first timer is in a running process, the UE does not detect the beam failure, the UE is not allowed to initiate the beam failure recovery process, or the UE is not allowed to initiate the random access process of the beam failure recovery.

Optionally, when the UE does not expect or intend to leave the RRC connected state, it may be considered that when the UE does not initialize the process of leaving the RRC connected state, it may be considered that when the UE does not send the release indication information to the network device, or it may be considered that when the first timer is not in the running process, the UE may further detect the beam failure, the UE may further initiate the beam failure recovery process, or the UE may further initiate the random access process of the beam failure recovery. In this case, the UE needs to further determine a related condition to determine whether the beam failure needs to be detected, whether the beam failure recovery process needs to be initiated, or whether the random access process of the beam failure recovery needs to be initiated. For example, when the UE determines that the UE does not expect to leave the RRC connected state, and when the control channel quality monitored by the UE is lower than the threshold for the specific period of time, the UE considers that the beam failure is detected. For example, when the UE determines that the UE expects to leave the RRC connected state, the UE does not monitor the control channel quality. For example, after the UE detects the beam failure, and the UE determines that the UE does not expect to leave the RRC connected state, the UE may indicate, to the network device by using the random access process of the beam failure recovery, that the beam failure occurs, and notify the network device of the backup beam number. For example, after the UE detects the beam failure, and the UE determines that the UE expects to leave the RRC connected state, the UE does not send, to the network device, information indicating the beam failure, does not notify the network device of the backup beam number, and the like.

That is, in the process in which the UE detects the beam failure, performs the beam failure recovery, initiates the random access for the beam failure recovery, and the like, a determining condition may be added, so that unnecessary behavior initiated by the UE can be avoided. For example, detecting the beam failure, initiating the beam failure recovery process, or initiating the random access process of the beam failure recovery can be avoided to be done by the UE.

A first timer provided in an embodiment of this application is described in detail below. It may be understood that the first timer in this embodiment of this application may be coupled to at least one of Embodiment 1 to Embodiment 6, or may be independent of Embodiment 1 to Embodiment 6. This is not limited in embodiments of this application.

When UE expects or intends to leave an RRC connected state, when the UE initializes a process of leaving the RRC connected state, or when the UE sends release indication information to a network device, the UE needs to start the first timer. For example, the first timer needs to be in a running process. Optionally, in the running process of the first timer, the UE waits for an RRC release message sent by the network device. Optionally, when the first timer expires and the UE does not receive the RRC release message sent by the network device, the UE automatically transits to an RRC idle state or an RRC inactive state.

In this embodiment of this application, starting or restarting of the first timer may satisfy one or more of the following conditions:
Optionally, when the UE initializes or triggers the process of leaving the RRC connected state, the UE starts or restarts the first timer.

Optionally, when the UE sends the release indication information to the network device, the UE starts or restarts the first timer.

Optionally, when the UE successfully sends the release indication information to the network device, the UE starts or restarts the first timer. The UE needs to determine that the network device successfully receives the release indication information. For example, the UE receives feedback information that is sent by the network device and that indicates that the release indication information is successfully received, for example, an acknowledgment (acknowledgement, ACK) at a physical layer or an acknowledgment message at an RLC layer. A manner in which the UE determines that the network device successfully receives the release indication information is not limited in this embodiment of this application.

In this embodiment of this application, stopping of the first timer may satisfy one or more of the following conditions:
Optionally, when the UE receives the RRC release message sent by the network device, the UE stops the first timer. Optionally, when the first timer expires, the first timer is stopped. For a description of counting duration of the first timer, such as first duration, refer to the foregoing description. Details are not described one by one herein again.

It may be understood that when the first timer in this embodiment of this application is decoupled from Embodiment 1 to Embodiment 6, the stopping of the first timer provided in this embodiment of this application may further include one or more of the following conditions:
Optionally, when the UE detects a radio link failure, the UE stops the first timer. Optionally, when the UE initializes an RRC connection reestablishment process, the UE stops the first timer. Optionally, when the UE performs a cell reselection process, the UE stops the first timer. Optionally, when the UE sends an RRC reestablishment request message to the network device, the UE stops the first timer. In other words, during a period of time within which the UE expects to leave the RRC connected state, keeps the RRC connected state with the network device, and waits for a period of time, if the UE detects the radio link failure, the UE can stop the first timer. Because the UE detects the radio link failure, it indicates that the UE further needs to initialize the RRC connection reestablishment, performs the cell reselection, or send the RRC reestablishment request message. Therefore, the UE can stop the first timer. Optionally, the UE may not transit from the RRC connected state to the RRC idle state or the RRC inactive state. For example, within the foregoing period of time, if the UE initializes the RRC connection reestablishment, the UE may also stop the first timer.

When the release indication information is carried in an NAS message, and the first timer is a timer maintained by the NAS, internal signaling interaction of the UE and signaling interaction between a core network device and an access network device may be shown as follows:
Optionally, the NAS of the UE generates (which may also be referred to as generating) the NAS message that carries the release indication information, and delivers the NAS message to an RRC layer of the UE. The NAS of the UE indicates any one or more of the following to the RRC layer:

The NAS message is a message that carries the release indication information, the NAS starts or restarts the first timer, running duration of the first timer (which may also be understood as the first duration), the release indication information is sent to the network device, and the release indication information is successfully sent to the network device.

The NAS of the UE indicates one or more pieces of the foregoing information to the RRC layer, so that the NAS determines the starting or the restarting of the first timer. For example, based on various cases in the "starting or restarting of the first timer", the starting or the restarting of the first timer maintained by the NAS of the UE is indicated. Optionally, the RRC layer, an MAC layer, or the PHY layer indicates the NAS to start or restart the first timer and/or the running duration of the first timer, the RRC layer, the MAC layer, or the PHY layer notifies the NAS that the release indication information is sent to the access network device, or the RRC layer notifies the NAS that the release indication information is successfully sent to the access network device, so that the NAS determines to start or restart the first timer.

Optionally, when the core network device receives the NAS message that carries the release indication information and that is sent by the UE, the core network device may further indicate to the access network device that the UE sends the release indication information. Optionally, the UE may send the NAS message that carries the release indication information to the access network device, and then the access network device transparently transmits the NAS message to the core network device. Optionally, the core network device may further indicate the access network device to start or restart the first timer and/or the running duration of the first timer, and the access network device starts or restarts the first timer based on a message sent by the core network device.

When the release indication information is carried in the NAS message, and the first timer is a timer maintained by the RRC layer, the internal signaling interaction of the UE and the signaling interaction between the core network device and the access network device may be shown as follows:
Optionally, the NAS of the UE generates (which may also be referred to as generating) the NAS message that carries the release indication information, and delivers the NAS message to the RRC layer of the UE. The NAS of the UE indicates any one or more of the following to the RRC layer:
The NAS message is the message that carries the release indication information, starting or restarting the first timer, and the running duration of the first timer. After learning of the information, the RRC layer of the UE may determine the starting or the restarting of the first timer based on the various cases in the "starting or restarting of the timer".

Optionally, when the core network device receives the NAS message that carries the release indication information and that is sent by the UE, the core network device may further indicate to the access network device that the UE sends the release indication information. Optionally, the core network device may further indicate the access network device to start or restart the timer and/or the running duration of the timer, and the access network device starts or restarts the timer based on a message sent by the core network device.

Some other terms related to this application are described in detail below.

UE needs to perform radio resource measurement (radio resource measurement, RRM) measurement on a serving cell or a neighboring cell in the serving cell, so that the UE obtains current channel quality, and determines whether to continue to stay in a current cell for communication, or to perform reselection or a handover to another cell with better channel quality for communication. For example, measurement behavior may be different based on a movement status of the UE and/or a location of the UE in a cell.

### a. Measurement relaxation on cell-center UE and/or low-speed moving UE

For example, for the cell-center UE and/or the low-speed moving UE, measurement on a neighboring cell may be relaxed, to reduce power consumption. A measurement relaxation criterion may be configured by a network device (for example, the access network device described above). For example, the measurement relaxation criterion may include:
1. A low-speed movement criterion may be: A change difference of reference signal received power (reference signal received power, RSRP) and/or a change difference of reference signal received quality (reference signal received quality, RSRQ) measured by the UE within a period of time are/is less than or equal to a threshold 1. It may be understood that whether a threshold 1 corresponding to RSRP is the same as a threshold 1 corresponding to RSRQ is not limited in this application. For example, the threshold 1 corresponding to RSRP and the threshold 1 corresponding to RSRQ may be different thresholds.
2. A cell edge criterion (which may also be referred to as a second criterion) may be: A value of RSRP and/or a value of RSRQ measured by the UE are/is greater than a threshold 2. It may be understood that whether a threshold 2 corresponding to RSRP is the same as a threshold 2 corresponding to RSRQ is not limited in this application. For example, the threshold 2 corresponding to RSRP and the threshold 2 corresponding to RSRQ may be different thresholds.

For example, the threshold 1 and/or the threshold 2 may be configured by the network device. For example, if the network device configures only the low-speed movement criterion but does not configure the cell edge criterion, the UE may determine whether the low-speed movement criterion is satisfied, and if the low-speed movement criterion is satisfied, the UE may perform the measurement relaxation. For example, if the network device configures only the cell edge criterion but does not configure the low-speed movement criterion, the UE may determine whether the cell edge criterion is satisfied, and if the cell edge criterion is satisfied, the UE may perform the measurement relaxation. For example, if the network device configures both the low-speed movement criterion and the cell edge criterion, the UE may perform the RRM relaxation provided that either the low-speed movement criterion or the cell edge criterion is satisfied, or the UE can perform the RRM relaxation only when both the low-speed movement criterion and the cell edge criterion are satisfied. Optionally, the network device may further configure whether the measurement relaxation is allowed to be performed on a high-priority frequency.

Optionally, the measurement on the neighboring cell includes one or more of the following: intra-frequency neighboring cell measurement, inter-frequency neighboring cell measurement, and inter-system neighboring cell measurement. Optionally, a measurement relaxation manner may include but is not limited to one or more of the following: extending a measurement period, reducing a quantity of measured frequencies or cells, and reducing measured reference signals. For example, extending the measurement period may include one or more of the following: extending the measurement period to three times an original measurement period, extending the measurement period to one hour, and not measuring the neighboring cell. A measurement relaxation manner after the UE satisfies only the low-speed movement criterion, a measurement relaxation manner after the UE satisfies only the cell edge criterion, and a measurement relaxation manner after the UE satisfies both the low-speed movement criterion and the cell edge criterion may be the same or may be different.

### b. Measurement relaxation on stationary UE

The measurement relaxation may also be performed on the stationary UE. For example, compared with the low-speed moving UE, the stationary UE may be relaxed to a greater extent, to further reduce the power consumption.

For example, the stationary UE may include UE that does not move, for example, completely stationary UE, and UE that can move but currently in a stationary state. A measurement relaxation criterion is configured by the network device.

For example, a stationary criterion (which may also be referred to as a first criterion) may be: A change difference of RSRP and/or a change difference of RSRQ measured by the UE within a period of time are/is less than or equal to a threshold 3. The threshold 3 may be configured by the network device, and RSRP and/or RSRQ may be a cell-level measurement result value, or may be a beam (beam)-level measurement result value. It may be understood that whether the threshold 3 corresponding to RSRP is the same as the threshold 3 corresponding to RSRQ is not limited in this application. For example, the threshold 3 corresponding to RSRP and the threshold 3 corresponding to RSRQ may be different thresholds. For example, both RSRP and RSRQ may be cell-level measurement result values, or both may be beam-level measurement result values. Alternatively, RSRP and RSRQ may be measurement result values of different levels, or the like. This is not limited in this application.

For example, when the UE satisfies the stationary criterion, the UE may perform the measurement relaxation. A measurement relaxation manner when the UE satisfies the stationary criterion may be different from the measurement relaxation manner when the UE satisfies only the low-speed movement criterion, the measurement relaxation manner when the UE satisfies only the cell edge criterion, and the measurement relaxation manner when the UE satisfies both the low-speed movement criterion and the cell edge criterion.

The stationary criterion can be used as a separate criterion to determine whether the measurement relaxation can be performed. Optionally, the stationary criterion may also be combined with a location of the UE in a cell. For example, both the movement status of the UE and the location of the UE in the cell are considered. Therefore, the stationary criterion can further be combined with the cell edge criterion. For example, as shown in Table 1, when the UE satisfies only the stationary criterion, the UE may perform the measurement relaxation according to a measurement relaxation manner 1. When the UE satisfies both the stationary criterion and the cell edge criterion, the UE may perform the measurement relaxation according to a measurement relaxation manner 2. The measurement relaxation manner 1 is different from the measurement relaxation manner 2, for example, the measurement relaxation manner 2 is more relaxed than the measurement relaxation manner 1.

**Table 1**

| Measurement relaxation criterion satisfied by a terminal device | Measurement relaxation manner after a measurement relaxation criterion is satisfied |
|---|---|
| Stationary criterion | Measurement relaxation manner 1 |
| Stationary criterion and cell edge criterion | Measurement relaxation manner 2 |

The cell edge criterion may be the cell edge criterion in the foregoing description of the cell-center and/or the low-speed moving UE, or a new cell edge criterion may be introduced. However, when the cell edge criterion is reused, it is not clear to the UE whether it is necessary to combine the stationary criterion with the cell edge criterion to determine whether the measurement relaxation can be performed.

In one case, the cell edge criterion configured by the network device is only a measurement relaxation criterion for the cell-center and/or the low-speed moving UE, and is not expected to be combined the stationary criterion. In another case, the cell edge criterion configured by the network device is the measurement relaxation criterion that may be used for the cell-center and/or the low-speed moving UE, and is also expected to be combined with the stationary criterion. If the network device configures the cell edge criterion, due to understanding of the two cases, understanding of the UE and the network device may be inconsistent. For example, a criterion used by the UE is inconsistent with a criterion that the network device expects to configure, so that system performance is affected.

In view of this, an embodiment of this application provides a method and apparatus for indicating measurement relaxation, which can effectively avoid a case in which the criterion used by the UE is inconsistent with the criterion configured by the network device, and effectively improve system performance.

In this embodiment of this application, a terminal device may receive first indication information sent by a network device. The first indication information indicates whether a first criterion needs to be combined with a second criterion, so that the terminal device clearly knows whether only the first criterion needs to be determined or whether the first criterion and the second criterion need to be determined together. Therefore, a problem that system performance deteriorates due to inconsistency between understanding of the terminal device and understanding the network device is avoided. It may be understood that for a specific description of the terminal device or the network device (for example, the access network device shown above) in this embodiment of this application, refer to the foregoing description. Details are not described herein again.

The method for indicating measurement relaxation provided in this application is described in detail below.

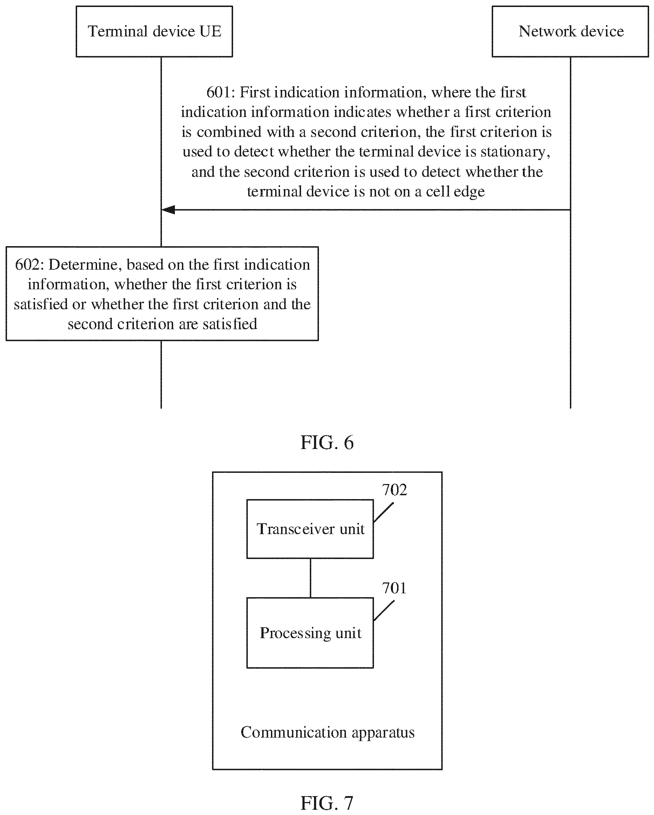

FIG. 6 is a schematic flowchart of a method for indicating measurement relaxation according to an embodiment of this application. As shown in FIG. 6, the method for indicating measurement relaxation includes:
601: A network device sends first indication information to a terminal device. Correspondingly, the terminal device receives the first indication information sent by the network device, where the first indication information indicates whether a first criterion is combined with a second criterion, the first criterion is used to detect whether the terminal device is stationary, and the second criterion is used to detect whether the terminal device is not on a cell edge.

For example, the first criterion is used to detect whether the terminal device is stationary, and the second criterion is used to detect whether the terminal device is not on the cell edge. Alternatively, the first criterion is used to detect that the terminal device is stationary, and the second criterion is used to detect that the terminal device is not on the cell edge. Alternatively, the first criterion is used to detect that the terminal device is stationary, and the second criterion is used to detect that the terminal device is not on the cell edge. Alternatively, the first criterion is used to detect that the terminal device is stationary, and the second criterion is used to detect that the terminal device is on the cell edge.

Optionally, the first criterion may be the stationary criterion, and the second criterion may be the cell edge criterion. For specific descriptions of the stationary criterion and the cell edge criterion, refer to the foregoing descriptions. Details are not described one by one herein again.

Optionally, the first criterion may be a stationary criterion of a first protocol version, and the second criterion may be a cell edge criterion of a second protocol version. For example, the first protocol version is release-17, and the second protocol version is release-16.

For example, whether the first criterion needs to be combined with the second criterion may be indicated based on whether the first indication information exists. For example, if the first indication information exists, it indicates that the first criterion needs to be combined with the second criterion. If the first indication information does not exist, it indicates that the first criterion does not need to be combined with the second criterion. Alternatively, if a value of the first indication information is a first value (for example, the value is 0 or TRUE), it indicates that the first criterion needs to be combined with the second criterion. If a value of the first indication information is a second value (for example, the value is 1 or FALSE), it indicates that the first criterion does not need to be combined with the second criterion.

Optionally, the terminal device receives information that indicates the first criterion and/or information that indicates the second criterion and that are/is sent by the network device. For example, the information that indicates the first criterion and the information that indicates the second criterion may be carried in a same message, or may be carried in different messages. For ease of description, the first criterion and the first indication information are described below by using the first criterion as an example. For example, the first indication information and the information that indicates the first criterion may be carried in a same message. For example, the first indication information and the information that indicates the first criterion may alternatively be carried in different messages. If the first indication information and the information that indicates the first criterion are carried in different messages, a sequence of sending the first indication information and the information that indicates the first criterion is not limited. For example, the first indication information and the information that indicates the first criterion may be carried in system information (system information, SI), for example, a system information block (system information block, SIB) 2.

602: The terminal device determines, based on the first indication information, whether the first criterion is satisfied or whether the first criterion and the second criterion are satisfied.

For example, if the first indication information indicates that the first criterion does not need to be combined with the second criterion, the terminal device only needs to determine whether the first criterion is satisfied. If the first indication information indicates that the first criterion needs to be combined with the second criterion, the terminal device only needs to determine whether the first criterion and the second criterion are satisfied.

Optionally, if the first indication information indicates that the first criterion does not need to be combined with the second criterion, the terminal device only needs to determine whether the first criterion is satisfied. If the terminal device determines that the first criterion is satisfied, the terminal device can perform measurement relaxation in a corresponding measurement relaxation manner. As shown in Table 1, the terminal device performs the measurement relaxation in the measurement relaxation manner 1. If the terminal device determines that the first criterion is not satisfied, the terminal device cannot perform the measurement relaxation.
Optionally, if the first indication information indicates that the first criterion needs to be combined with the second criterion, the terminal device needs to determine whether the first criterion and the second criterion are satisfied. The terminal device may perform the measurement relaxation based on whether the first criterion and the second criterion are satisfied in the following implementations:

### Implementation 1

If the terminal device determines that the first criterion and the second criterion are satisfied, the terminal device can perform the measurement relaxation in a corresponding measurement relaxation manner. As shown in Table 2, the terminal device performs the measurement relaxation in a measurement relaxation manner 2. If the terminal device determines that the first criterion and the second criterion are not satisfied, the terminal device cannot perform the measurement relaxation.

**Table 2**

| Measurement relaxation criterion satisfied by a terminal device | Measurement relaxation manner |
|---|---|
| A first criterion and a second criterion are satisfied | Measurement relaxation is performed (For example, measurement relaxation manner 2) |
| The first criterion and the second criterion are not satisfied | The measurement relaxation is not performed |

It may be understood that in Implementation 1, there are only two cases in which "the first criterion and the second criterion" are satisfied and "the first criterion and the second criterion" are not satisfied, and there are only two cases in which "the measurement relaxation is performed in the measurement relaxation manner 2" and "the measurement relaxation is not performed".

### Implementation 2

If the terminal device determines that the first criterion and the second criterion are satisfied, the terminal device can perform the measurement relaxation in a corresponding measurement relaxation manner. As shown in Table 3, the terminal device performs the measurement relaxation in a measurement relaxation manner 2. If the terminal device determines that the first criterion and the second criterion are not simultaneously satisfied, but only the first criterion is satisfied, the terminal device can perform the measurement relaxation in a corresponding measurement relaxation manner. As shown in Table 3, the terminal device performs the measurement relaxation in a measurement relaxation manner 1. If the terminal device determines that the first criterion and the second criterion are not simultaneously satisfied, and only the first criterion is not satisfied either, the terminal device cannot perform the measurement relaxation.

**Table 3**

| Measurement relaxation criterion satisfied by a terminal device | Measurement relaxation manner |
|---|---|
| A first criterion and a second criterion are satisfied | Measurement relaxation is performed (For example, measurement relaxation manner 2) |
| The first criterion and the second criterion are not simultaneously satisfied, but only the first criterion is satisfied | The measurement relaxation is performed (For example, measurement relaxation manner 1) |
| The first criterion and the second criterion are not simultaneously satisfied, and only the first criterion is not satisfied either | The measurement relaxation is not performed |

It may be understood that in Implementation 2, there are three cases in which "the first criterion and the second criterion" are satisfied, "the first criterion and the second criterion" are not simultaneously satisfied, but only the first criterion is satisfied, and "the first criterion and the second criterion" are not simultaneously satisfied, and only the first criterion is not satisfied either. In addition, there are three cases in which "the measurement relaxation is performed in the measurement relaxation manner 2", "the measurement relaxation is performed in the measurement relaxation manner 1", and "the measurement relaxation is not performed".

It may be understood that the measurement relaxation manner 2 may also be referred to as a second measurement relaxation manner, and the measurement relaxation manner 1 may also be referred to as a first measurement relaxation manner. A specific name of the measurement relaxation manner is not limited in this embodiment of this application.

### Implementation 3

The network device may further configure whether to allow the terminal device to perform the measurement relaxation when only the first criterion is satisfied.

Optionally, the terminal device receives second indication information sent by the network device, where the second indication information indicates whether the terminal device is allowed to perform the measurement relaxation when only the first criterion is satisfied.

For example, whether the second indication information exists may indicate whether the terminal device is allowed to perform the measurement relaxation when only the first criterion is satisfied. For example, if the second indication information exists, it indicates that the terminal device is allowed to perform the measurement relaxation when only the first criterion is satisfied. For another example, if the second indication information does not exist, it indicates that the terminal device is not allowed to perform the measurement relaxation when only the first criterion is satisfied. Alternatively, if a value of the second indication information is a first value (for example, the value is 0 or TRUE), it indicates that the terminal device is allowed to perform the measurement relaxation when only the first criterion is satisfied. If a value of the second indication information is a second value (for example, the value is 1 or FALSE), it indicates that the terminal device is not allowed to perform the measurement relaxation when only the first criterion is satisfied.

Optionally, if the second indication information indicates that the terminal device is not allowed to perform the measurement relaxation when only the first criterion is satisfied, the terminal device does not need to determine whether only the first criterion is satisfied. In this case, there are only two cases in which "the first criterion and the second criterion" are satisfied, and "the first criterion and the second criterion" are not satisfied. Similar to Implementation 1, if the terminal device determines that the first criterion and the second criterion are satisfied, the terminal device can perform the measurement relaxation in a corresponding measurement relaxation manner. As shown in Table 2, the terminal device performs the measurement relaxation in the measurement relaxation manner 2. If the terminal device determines that the first criterion and the second criterion are not satisfied, the terminal device cannot perform the measurement relaxation.

Optionally, if the second indication information indicates that the terminal device is allowed to perform the measurement relaxation when only the first criterion is satisfied, the terminal device needs to determine whether only the first criterion is satisfied. In this case, there are three cases in which "the first criterion and the second criterion" are satisfied, "the first criterion and the second criterion" are not simultaneously satisfied, but only the first criterion is satisfied, and "the first criterion and the second criterion" are not simultaneously satisfied, and only the first criterion is not satisfied either. Similar to Implementation 2, if the terminal device determines that the first criterion and the second criterion are satisfied, the terminal device can perform the measurement relaxation in a corresponding measurement relaxation manner. As shown in Table 3, the terminal device performs the measurement relaxation in the measurement relaxation manner 2. If the terminal device determines that the first criterion and the second criterion are not simultaneously satisfied, but only the first criterion is satisfied, the terminal device can perform the measurement relaxation in a corresponding measurement relaxation manner. As shown in Table 3, the terminal device performs the measurement relaxation in the measurement relaxation manner 1. If the terminal device determines that the first criterion and the second criterion are not simultaneously satisfied, and only the first criterion is not satisfied either, the terminal device cannot perform the measurement relaxation.

According to this embodiment of this application, a problem that system performance deteriorates due to inconsistency between understanding of the terminal device and understanding of the network device can be effectively avoided. For example, the first indication information is used, so that the terminal device clearly knows whether only the first criterion needs to be determined or whether the first criterion and the second criterion need to be determined together.

Optionally, if the network device configures only the first criterion for the terminal device, the terminal device only needs to determine whether the first criterion is satisfied. In this case, the network device does not need to send the first indication information to the terminal device. If the terminal device determines that the first criterion is satisfied, the terminal device can perform the measurement relaxation in a corresponding measurement relaxation manner. The terminal device performs the measurement relaxation in the measurement relaxation manner 1. If the terminal device determines that the first criterion is not satisfied, the terminal device cannot perform the measurement relaxation.

Optionally, the cell edge criterion may reuse the cell edge criterion in release-16, or may use a newly introduced cell edge criterion in release-17. Optionally, a third criterion may be further included, and the third criterion may be the cell edge criterion. The third criterion is the cell edge criterion of the first protocol version.

Optionally, the terminal device receives information that is sent by the network device and that indicates the third criterion. Specifically, the third criterion, the first criterion, and the second criterion may be carried in a same message, or may be carried in different messages. If the third criterion, the first criterion, and the second criterion are carried in different messages, a sequence of sending the third criterion, the first criterion, and the second criterion is not limited. For example, the third criterion, the first criterion, and the second criterion may be carried in system information (system information, SI), for example, a system information block (system information block, SIB) 2.

Optionally, if the network device configures the first criterion, the second criterion, and the third criterion for the terminal device, the terminal device only needs to determine whether the first criterion and/or the third criterion are/is satisfied, and ignores the second criterion. In this case, the network device does not need to send the first indication information to the terminal device.

This application further provides the following embodiments. It should be noted that, numbers of the following embodiments do not need to comply with a sequence of numbers of the foregoing embodiments.
1. An embodiment for indicating measurement relaxation, where the embodiment is applied to a terminal device, and the embodiment includes:
   receiving first indication information sent by a network device, where the first indication information indicates whether a first criterion is combined with a second criterion, the first criterion is a criterion used to detect whether the terminal device is stationary, and the second criterion is a criterion used to detect whether the terminal device is not on a cell edge; and
   determining, based on the first indication information, whether the first criterion is satisfied or whether the first criterion and the second criterion are satisfied.
2. The embodiment according to embodiment 1, where the embodiment further includes:
   receiving information that indicates the first criterion and/or information that indicates the second criterion and that are/is sent by the network device.
3. The embodiment according to embodiment 1 or 2, where the embodiment further includes:
   if the first indication information indicates that the first criterion is not combined with the second criterion, determining whether the first criterion is satisfied; and
   if the terminal device satisfies the first criterion, performing measurement relaxation in a first measurement relaxation manner; or if the terminal device does not satisfy the first criterion, skipping performing measurement relaxation.
4. The embodiment according to embodiment 1 or 2, where the embodiment further includes:
   if the first indication information indicates that the first criterion is combined with the second criterion, determining whether the first criterion is satisfied or whether the first criterion and the second criterion are satisfied; and
   if the terminal device satisfies the first criterion and the second criterion, performing measurement relaxation in a second measurement relaxation manner; or
   if the terminal device does not satisfy the first criterion and the second criterion, skipping performing measurement relaxation.
5. The embodiment according to embodiment 1 or 2, where the embodiment further includes:
   if the first indication information indicates that the first criterion is combined with the second criterion, determining whether the first criterion is satisfied or whether the first criterion and the second criterion are satisfied; and
   if the terminal device determines that the first criterion and the second criterion are satisfied, performing measurement relaxation in a second measurement relaxation manner;
   if the terminal device determines that the first criterion and the second criterion are not simultaneously satisfied, and only the first criterion is satisfied, performing measurement relaxation in a first measurement relaxation manner; or
   if the terminal device determines that the first criterion and the second criterion are not simultaneously satisfied, and only the first criterion is not satisfied either, skipping performing measurement relaxation.
6. The embodiment according to embodiment 4 or 5, where the embodiment further includes:
   receiving second indication information sent by the network device, where the second indication information indicates whether the terminal device is allowed to perform the measurement relaxation when the terminal device only satisfies the first criterion.
7. The embodiment according to embodiment 6, where the second indication information indicates the terminal device is not allowed to perform the measurement relaxation when the terminal device only satisfies the first criterion.
8. The embodiment according to embodiment 6, where the second indication information indicates that the terminal device is allowed to perform the measurement relaxation when the terminal device only satisfies the first criterion.
9. The embodiment according to any one of embodiments 1 to 8, where the first criterion corresponds to a first protocol version, and the second criterion corresponds to a second protocol version.

The following describes communication apparatuses provided in embodiments of this application.

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, is merely logical function division, and may be other division in an actual implementation. The following describes in detail the communication apparatuses in embodiments of this application with reference to FIG. 7 to FIG. 9.

FIG. 7 is a schematic diagram of a structure of a communication apparatus according to an embodiment of this application. As shown in FIG. 7, the communication apparatus includes a processing unit 701 and a transceiver unit 702.

In some embodiments of this application, the communication apparatus may be the terminal device shown above, a chip in the terminal device, or the like. For example, the communication apparatus may be configured to perform the methods shown in FIG. 3a to FIG. 3c in the foregoing method embodiments. For example, the communication apparatus may be configured to perform any one or more of the methods shown in the foregoing method Embodiment 1 to Embodiment 6.

The processing unit 701 is configured to determine that a first condition is not satisfied or determine that a second condition is satisfied, where the first condition indicates that a terminal device expects to leave a radio resource control RRC connected state, and the second condition indicates that the terminal device does not expect to leave the radio resource control RRC connected state.

The processing unit 701 is further configured to perform any one or more of the following: detecting a physical layer problem of the terminal device, detecting a radio link failure, initializing RRC connection reestablishment, performing cell reselection, sending an RRC reestablishment request message, detecting a beam failure, performing beam failure recovery, and initiating random access for the beam failure recovery.

Optionally, the processing unit 701 may perform the cell reselection, send the RRC reestablishment request message, or the like by using the transceiver unit 702. A specific manner of the transceiver unit 702 and the processing unit 701 is not limited in this embodiment of this application.

In a possible implementation, the processing unit 701 is further configured to: determine that the first condition is satisfied or determine that the second condition is not satisfied; and skip performing any one or more of the following: detecting the physical layer problem of the terminal device, detecting the radio link failure, initializing the RRC connection reestablishment, performing the cell reselection, sending the RRC reestablishment request message, detecting the beam failure, performing the beam failure recovery, and initiating the random access for the beam failure recovery.

Optionally, the processing unit 701 may further be understood as that the processing unit 701 may determine whether the first condition or the second condition is satisfied, and determine, based on whether the first condition is satisfied, whether to perform operations such as detecting the physical layer problem, detecting the radio link failure, or initializing the RRC connection reestablishment.

In a possible implementation, the first condition includes any one or more of the following: The terminal device expects to leave the RRC connected state; the terminal device initializes a process of leaving the RRC connected state; the terminal device sends first indication information to a network device, where the first indication information indicates that the terminal device expects to leave the RRC connected state; and a first timer is running, where the first timer is configured to control the terminal device to leave the RRC connected state.

In a possible implementation, the second condition includes any one or more of the following: The terminal device does not expect to leave the RRC connected state; the terminal device does not initialize a process of leaving the RRC connected state; the terminal device does not send first indication information to a network device, where the first indication information indicates that the terminal device expects to leave the RRC connected state; and a first timer is not running, where the first timer is configured to control the terminal device to leave the RRC connected state.

In a possible implementation, the processing unit 701 is further configured to start or restart the first timer when one or more of the following conditions are satisfied: The terminal device initializes the process of leaving the RRC connected state; the terminal device sends the first indication information to the network device, where the first indication information indicates that the terminal device expects to leave the RRC connected state; and the terminal device successfully sends the first indication information to the network device, where the first indication information indicates that the terminal device expects to leave the RRC connected state.

In a possible implementation, when an RRC release message sent by the network device is received, the processing unit 701 is further configured to stop the first timer; or when the first timer expires, the processing unit 701 is further configured to stop the first timer.

In a possible implementation, the processing unit 701 is specifically configured to: when at least one item in a third condition is satisfied and at least one item in a fourth condition is not satisfied, initialize the RRC connection reestablishment, where
the third condition includes: a radio link failure is detected, reconfiguration synchronization fails, movement from a new radio NR fails, integrity protection verification fails to be received from a lower layer, and RRC connection reconfiguration fails; and the fourth condition includes: Access stratum AS security is not activated, and the AS security is activated but a signaling radio bearer SRB 2 and at least one data radio bearer DRB are not established or the SRB 2 is not established in an integrated access and backhaul IAB scenario.

In a possible implementation, the processing unit 701 is specifically configured to detect that a radio link failure occurs on a master node MN or a master cell group MCG in dual connectivity DC; or detect that a radio link failure occurs on a secondary node SN or a secondary cell group SCG in dual connectivity DC.

For descriptions of the first condition, the second condition, the radio link failure, initialization of the RRC connection reestablishment, the cell reselection, sending of the RRC reestablishment request message, the beam failure, the beam failure recovery, and the like in this embodiment of this application, refer to the descriptions in the foregoing method embodiments. Details are not described one by one herein again.

It may be understood that specific descriptions of the transceiver unit 702 and the processing unit 701 described in this embodiment of this application are merely examples. For specific functions of, steps performed by, or the like of the transceiver unit 702 and the processing unit 701, refer to the foregoing method embodiments. Details are not described herein again.

FIG. 7 is reused. In some other embodiments of this application, the communication apparatus may be the terminal device shown above, a chip in the terminal device, or the like. For example, the communication apparatus may be configured to perform the method shown in FIG. 6 in the foregoing method embodiments. For example, the communication apparatus may be configured to perform related methods and the like shown in Table 1 to Table 3 in the foregoing method embodiments.

The transceiver unit 702 is configured to receive first indication information sent by a network device, where the first indication information indicates whether a first criterion is combined with a second criterion, the first criterion is a criterion used to detect whether the terminal device is stationary, and the second criterion is a criterion used to detect whether the terminal device is not on a cell edge.

The processing unit 701 is configured to determine, based on the first indication information, whether the first criterion is satisfied or whether the first criterion and the second criterion are satisfied.

In a possible implementation, the transceiver unit 702 is further configured to receive information that indicates the first criterion and/or information that indicates the second criterion and that are/is sent by the network device.

In a possible implementation, the processing unit 701 is further configured to: if the first indication information indicates that the first criterion is not combined with the second criterion, determine whether the first criterion is satisfied; and if the terminal device satisfies the first criterion, perform measurement relaxation in a first measurement relaxation manner; or if the terminal device does not satisfy the first criterion, skip performing measurement relaxation.

In a possible implementation, the processing unit 701 is further configured to: if the first indication information indicates that the first criterion is combined with the second criterion, determine whether the first criterion is satisfied or whether the first criterion and the second criterion are satisfied; and if the terminal device satisfies the first criterion and the second criterion, perform measurement relaxation in a second measurement relaxation manner; or if the terminal device does not satisfy the first criterion and the second criterion, skip performing measurement relaxation.

In a possible implementation, the processing unit 701 is further configured to: if the first indication information indicates that the first criterion is combined with the second criterion, determine whether the first criterion is satisfied or whether the first criterion and the second criterion are satisfied; and if it is determined that the terminal device satisfies the first criterion and the second criterion, perform measurement relaxation in a second measurement relaxation manner; if it is determined that the terminal device does not simultaneously satisfy the first criterion and the second criterion, and only satisfies the first criterion, perform measurement relaxation in a first measurement relaxation manner; or if it is determined that the terminal device does not simultaneously satisfy the first criterion and the second criterion, and does not only satisfy the first criterion either, skip performing measurement relaxation.

In a possible implementation, the transceiver unit 702 is further configured to receive second indication information sent by the network device, where the second indication information indicates whether the terminal device is allowed to perform the measurement relaxation when the terminal device only satisfies the first criterion.

In a possible implementation, the second indication information indicates the terminal device is not allowed to perform the measurement relaxation when the terminal device only satisfies the first criterion.

In a possible implementation, the second indication information indicates that the terminal device is allowed to perform the measurement relaxation when the terminal device only satisfies the first criterion.

In a possible implementation, the first criterion corresponds to a first protocol version, and the second criterion corresponds to a second protocol version.

It may be understood that specific descriptions of the transceiver unit and the processing unit described in this embodiment of this application are merely examples. For specific functions of, steps performed by, or the like of the transceiver unit and the processing unit, refer to the foregoing method embodiment (as shown in FIG. 6). Details are not described herein again.

The foregoing describes the terminal device in embodiments of this application, and the following describes possible product forms of the terminal device. It should be understood that any product in any form that has a function of the terminal device shown in FIG. 7 falls within the protection scope of embodiments of this application. It should be further understood that the following descriptions are merely examples, and a product form of the terminal device in embodiments of this application is not limited thereto.

In a possible implementation, in the communication apparatus shown in FIG. 7, the processing unit 701 may be one or more processors. The transceiver unit 702 may be a transceiver, or the transceiver unit 702 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A connection manner between the processor and the transceiver is not limited in this embodiment of this application.

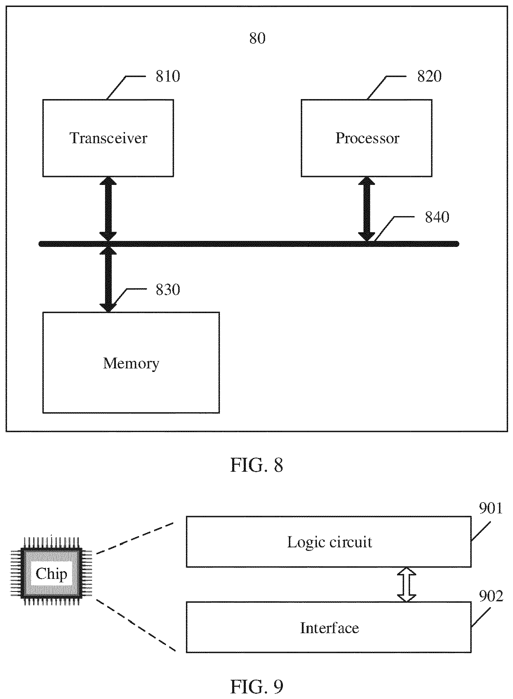

As shown in FIG. 8, a communication apparatus 80 includes one or more processors 820 and a transceiver 810.

In some embodiments of this application, for example, the processor 820 is configured to: determine whether a first condition is satisfied or determine whether a second condition is satisfied; and when the first condition is not satisfied or the second condition is satisfied, perform any one or more of the following, or when the first condition is satisfied or the second condition is not satisfied, skip performing any one or more of the following: detecting a physical layer problem of a terminal device, detecting a radio link failure, initializing RRC connection reestablishment, performing cell reselection, sending an RRC reestablishment request message, detecting a beam failure, performing beam failure recovery, and initiating random access for the beam failure recovery.

It may be understood that for specific descriptions of the processor and the transceiver, refer to the foregoing transceiver unit and processing unit. Details are not described herein again.

In some other embodiments of this application, for example, the transceiver 810 is configured to receive first indication information sent by a network device. The processor 820 is configured to determine, based on the first indication information, whether a first criterion is satisfied, or whether a first criterion and a second criterion are satisfied.

It may be understood that for specific descriptions of the processor and the transceiver, refer to the foregoing transceiver unit and processing unit. Details are not described herein again.

In various embodiments of the communication apparatus shown in FIG. 8, the transceiver may include a receiver and a transmitter, the receiver is configured to perform a receiving function (or operation), and the transmitter is configured to perform a transmitting function (or operation). The transceiver is configured to communicate with another device/apparatus through a transmission medium.

Optionally, the communication apparatus 80 may further include one or more memories 830, configured to store program instructions and/or data. The memory 830 is coupled to the processor 820. The coupling in this embodiment of this application may be an indirect coupling or a communication connection between apparatuses, units, or modules in electronic, mechanical, or other forms, and is used for information exchange between the apparatuses, the units, or the modules. The processor 820 may cooperate with the memory 830. The processor 820 may execute the program instructions stored in the memory 830. Optionally, at least one of the one or more memories may be included in the processor.

In this embodiment of this application, a specific connection medium among the transceiver 810, the processor 820, and the memory 830 is not limited. In this embodiment of this application, in FIG. 8, the memory 830, the processor 820, and the transceiver 810 are connected to each other through a bus 840. The bus is represented by using a thick line in FIG. 8. A manner of connection between other components is only schematically described, but is not used as a limitation. The bus may be classified into an address bus, a data bus, a control bus, and the like. For ease of representation, only one thick line is for representing the bus in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly executed and accomplished by a hardware processor, or may be executed and accomplished by using a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in embodiments of this application may alternatively be a circuit or any other apparatus that can implement a storage function, and is configured to store the program instructions and/or the data.

The processor 820 is mainly configured to process a communication protocol and communication data, control the communication apparatus, execute a software program, and process data of the software program. The memory 830 is mainly configured to store the software program and the data. The transceiver 810 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. An input/output apparatus, such as a touchscreen, a display, or a keyboard, is mainly configured to: receive data input by a user and output data to the user.

After the communication apparatus is powered on, the processor 820 may read the software program in the memory 830, interpret and execute instructions of the software program, and process data of the software program. When data needs to be sent wirelessly, the processor 820 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 820. The processor 820 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus shown in this embodiment of this application may alternatively include more components or the like than those shown in FIG. 8. This is not limited in this embodiment of this application. The methods performed by the processor and the transceiver are merely examples. For specific steps performed by the processor and the transceiver, refer to the methods described above.

In another possible implementation, in the communication apparatus shown in FIG. 7, the processing unit 701 may be one or more logic circuits, and the transceiver unit 702 may be an input/output interface, which is also referred to as a communication interface, an interface circuit, an interface, or the like. Alternatively, the transceiver unit 702 may be a sending unit and a receiving unit. The sending unit may be an output interface, and the receiving unit may be an input interface. Alternatively, the sending unit and the receiving unit are integrated into one unit, for example, an input/output interface. As shown in FIG. 9, a communication apparatus shown in FIG. 9 includes a logic circuit 901 and an interface 902. For example, the processing unit 701 may be implemented by using the logic circuit 901, and the transceiver unit 702 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 9 is an example in which the communication apparatus is a chip. The chip includes the logic circuit 901 and the interface 902.

In this embodiment of this application, the logic circuit may further be coupled to the interface. A specific connection manner of the logical circuit and the interface is not limited in this embodiment of this application.

For example, the logic circuit 901 is configured to: determine whether a first condition is satisfied or determine whether a second condition is satisfied; and when the first condition is not satisfied or the second condition is satisfied, perform any one or more of the following, or when the first condition is satisfied or the second condition is not satisfied, skip performing any one or more of the following:
detecting a physical layer problem of a terminal device, detecting a radio link failure, initializing RRC connection reestablishment, performing cell reselection, sending an RRC reestablishment request message, detecting a beam failure, performing beam failure recovery, and initiating random access for the beam failure recovery.

It may be understood that the logic circuit may perform the step of sending the RRC connection reestablishment request message by using the interface, or initiate the random access for the beam failure recovery by using the interface. This is not limited in this embodiment of this application.

It may be understood that the communication apparatus shown in this embodiment of this application may implement the method provided in embodiments of this application in a form of hardware or in a form of software. This is not limited in embodiments of this application.

For specific implementations of the embodiment shown in FIG. 9, refer to the foregoing embodiments. Details are not described herein again.

In addition, this application further provides a computer program. The computer program is used to implement operations and/or processing performed by the terminal device in the method provided in this application.

This application further provides a computer-readable storage medium. The computer-readable storage medium stores a computer program. When the computer program is run on a computer, the computer is enabled to perform operations and/or processing performed by the terminal device in the method provided in this application.

It may be understood that the computer program shown above may also be referred to as a computer program product, computer code, instructions, or the like. In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, for example, may be located in one position, or may be distributed on a plurality of network units. Some or all of the units may be selected based on actual requirements to achieve the technical effect of the solutions provided in embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable-storage medium, and includes several instructions for instructing a computer device (which may be a personal computer, a server, a network device, or the like) to perform all or some of the steps of the methods described in embodiments of this application. The readable-storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device, and the method comprises:
determining that a first condition is not satisfied or determining that a second condition is satisfied, wherein the first condition indicates that the terminal device expects to leave a radio resource control RRC connected state, and the second condition indicates that the terminal device does not expect to leave the radio resource control RRC connected state; and
performing any one or more of the following:
detecting a physical layer problem of the terminal device, detecting a radio link failure, initializing RRC connection reestablishment, performing cell reselection, sending an RRC reestablishment request message, detecting a beam failure, performing beam failure recovery, and initiating random access for the beam failure recovery.

2. The method according to claim 1, wherein the method further comprises:
determining that the first condition is satisfied or determining that the second condition is not satisfied; and
skipping performing any one or more of the following:
detecting the physical layer problem of the terminal device, detecting the radio link failure, initializing the RRC connection reestablishment, performing the cell reselection, sending the RRC reestablishment request message, detecting the beam failure, performing the beam failure recovery, and initiating the random access for the beam failure recovery.

3. The method according to claim 1 or 2, wherein the first condition comprises any one or more of the following:
the terminal device expects to leave the RRC connected state;
the terminal device initializes a process of leaving the RRC connected state;
the terminal device sends first indication information to a network device, wherein the first indication information indicates that the terminal device expects to leave the RRC connected state; and
a first timer is running, wherein the first timer is configured to control the terminal device to leave the RRC connected state.

4. The method according to claim 1 or 2, wherein the second condition comprises any one or more of the following:
the terminal device does not expect to leave the RRC connected state;
the terminal device does not initialize a process of leaving the RRC connected state;
the terminal device does not send first indication information to a network device, wherein the first indication information indicates that the terminal device expects to leave the RRC connected state; and
a first timer is not running, wherein the first timer is configured to control the terminal device to leave the RRC connected state.

5. The method according to claim 3 or 4, wherein the first timer is started or restarted when one or more of the following conditions are satisfied:
the terminal device initializes the process of leaving the RRC connected state;
the terminal device sends the first indication information to the network device, wherein the first indication information indicates that the terminal device expects to leave the RRC connected state; and
the terminal device successfully sends the first indication information to the network device, wherein the first indication information indicates that the terminal device expects to leave the RRC connected state.

6. The method according to claim 5, wherein when an RRC release message sent by the network device is received, the first timer is stopped; or
when the first timer expires, the first timer is stopped.

7. The method according to any one of claims 1 to 6, wherein the initializing RRC connection reestablishment comprises:
when at least one item in a third condition is satisfied and at least one item in a fourth condition is not satisfied, initializing the RRC connection reestablishment, wherein
the third condition comprises: a radio link failure is detected, reconfiguration synchronization fails, movement from a new radio NR fails, integrity protection verification fails to be received from a lower layer, and RRC connection reconfiguration fails; and
the fourth condition comprises: access stratum AS security is not activated, and the AS security is activated but a signaling radio bearer SRB 2 and at least one data radio bearer DRB are not established or the SRB 2 is not established in an integrated access and backhaul IAB scenario.

8. The method according to any one of claims 1 to 7, wherein the detecting a radio link failure comprises:
detecting that a radio link failure occurs on a master node MN or a master cell group MCG in dual connectivity DC; or
detecting that a radio link failure occurs on a secondary node SN or a secondary cell group SCG in dual connectivity DC.

9. A communication apparatus, comprising a processor and a memory, wherein
the processor is configured to store a computer program; and
the processor is configured to execute the computer program, to perform the method according to any one of claims 1 to 8.

10. A communication apparatus, comprising a logic circuit and an interface, wherein the logic circuit is coupled to the interface; and
the interface is configured to input and/or output code instructions, and the logic circuit is configured to execute the code instructions, to perform the method according to any one of claims 1 to 8.

11. A computer-readable storage medium, wherein the computer-readable storage medium is configured to store a computer program, and when the computer program is executed, the method according to any one of claims 1 to 8 is performed.
